(19) Europäisches Patentamt
European Patent Office
Office européen des brevets

(11) EP 3 056 397 B1

(12) **EUROPEAN PATENT SPECIFICATION**

(45) Date of publication and mention
of the grant of the patent:
**13.11.2019 Bulletin 2019/46**

(51) Int Cl.:
***B60T 8/32*** *(2006.01)*   ***B60T 8/17*** *(2006.01)*
***B60T 13/26*** *(2006.01)*   ***B60L 7/24*** *(2006.01)*

(21) Application number: **16154195.8**

(22) Date of filing: **04.02.2016**

(54) **BRAKE CONTROL DEVICE AND BRAKE CONTROL METHOD**

BREMSSTEUERUNGSVORRICHTUNG UND BREMSSTEUERUNGSVERFAHREN

PROCÉDÉ ET DISPOSITIF DE CONTRÔLE DE FREINAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **10.02.2015 JP 2015024709**

(43) Date of publication of application:
**17.08.2016 Bulletin 2016/33**

(73) Proprietor: **NABTESCO CORPORATION**
**Chiyoda-ku**
**Tokyo 102-0093 (JP)**

(72) Inventors:
• **MAEDA, Wataru**
**Kobe-shi, Hyogo 651-2271 (JP)**
• **ATSUMO, Daichi**
**Kobe-shi, Hyogo 651-2271 (JP)**

(74) Representative: **Grünecker Patent- und**
**Rechtsanwälte**
**PartG mbB**
**Leopoldstraße 4**
**80802 München (DE)**

(56) References cited:
**EP-A1- 2 527 183**   **WO-A2-2006/103636**
**JP-A- 2001 275 211**   **JP-A- 2005 261 095**
**JP-A- 2014 023 004**   **US-A- 3 910 641**
**US-A- 5 823 638**   **US-A1- 2011 029 167**

**Description**

The present invention relates to a brake control device and a brake control method, more specifically, to a brake control device and a brake control method for a rail vehicles of a train.

Electric brakes, such as regenerative brakes and dynamic brakes, and mechanical brakes, such as compressed air brakes and hydraulic brakes, are known in the art. Kameda (Japanese Laid-Open Utility Model Publication No. 59-107502) discloses a deceleration control device for trains. The deceleration control device controls the brake force of a vehicle in response to a brake command that instructs a deceleration value. Further, Nankyo et al. ("Development of a braking system equipped with deceleration feedback control," RTRI REPORT, Vol. 23, No. 4, pages 41-46, April 2009 published by Railway Technical Research Institute) discloses a train brake control system that calculates the brake force required for an entire train and distributes the required brake force among the vehicles of the train.

The deceleration control device of Kameda controls the brake force to be the same in each vehicle of the train. In this case, the deceleration may change when the rail surface varies in condition. In such a case, the brake force may become excessive in one or more vehicles of the train. As a result, the wheels of such a vehicle may slide on the rails.

The brake control system of Nankyo et al. detects situations in which the brake force is excessive in some vehicles of a train. In such a case, the brake control system decreases the brake force in such vehicles and increases the brake force in the remaining vehicles to maintain the brake force required for the entire train to prevent sliding of the vehicle of the train.

In Nankyo et al., however, the vehicles of the train all perform communication with one another to calculate and maintain the brake force required for the entire train. This lengthens the time used to determine the brake force required for each vehicle and allocate the suitable brake force to each vehicle of the train.

US Patent Application No. 5 823 638 describes a brake system which is provided for a multi-platform railroad car in which a single microprocessor is employed to control the car brakes. In one embodiment, a single electro-pneumatic control unit provides a common brake pressure to the brakes of each truck in accordance with the truck design net brake ratio and load weight of whichever truck requires the lowest brake pressure. In a second embodiment of the invention, the brakes on separate truck sets are provided with different common brake pressures by employing separate electro-pneumatic control units for each truck set under control of the microprocessor. In such an arrangement, the different common brake pressure on one truck set can be increased to make-up at least a portion of a brake deficit on another truck set due to light car loads associated with the other truck set in order to meet or at least closely approach the commanded net braking ratio for the entire multi-platform car.

US Patent Application No. 2011 / 029167 A1 discloses a train slide control device and a train slide control method. The train slide control device comprises: an electromagnetic valve unit: a relay valve that outputs a pressure of the brake cylinder; and a slide controller that includes: a velocity-difference detecting unit that detects a velocity difference of each wheel based on a velocity signal; a deceleration calculating unit that calculates a deceleration of a train based on the velocity signal; a sliding-amount determining unit that determines a sliding-amount of each wheel based on the velocity difference and deceleration: and a brake-cvlinder-pressure calculating unit that calculates a pressure control signal for controlling a pressure of the brake cylinder based on: the sliding-amount; a brake command for obtaining a predetermined deceleration;; and a signal that indicates the pressure of the compressed air and a pressure of the brake cylinder.

EP Patent Application No. 2 527 183 A1 discloses a brake force acquisition unit which acquires the necessary brake force necessary for each car or flatcar of a train containing a motor car. An electric brake force detection unit detects an electric brake force of the entire composition of the train. A brake force adjustment unit distributes the air brake force so that fluctuations in the electric brake force are compensated for by the air brake force of one car or flatcar, in an operating period of one deceleration of the train or from running to stopping. A brake force command unit sends a command to an air brake control device for the value distributed by the brake force adjustment unit.: The air brake control device controls the air brake of the car in accordance with the value commanded.

It is an object of the present invention to provide a brake control device and a brake control method that allows suitable brake to be readily allocated to each vehicle of a train.

One aspect of the present invention is a brake control device for a vehicle unit of a train. The vehicle unit is a sub-set of the train and includes a plurality of vehicles. The brake control device includes a required brake force calculator and a brake force distributor. The required brake force calculator is configured to calculate a plurality of required vehicle brake forces, which are respectively required for the vehicles of the vehicle unit, based on a plurality of detected decelerations respectively corresponding to the vehicles of the vehicle unit and to calculate a required unit brake force, which is the total of the required vehicle brake forces of the vehicles of the vehicle unit. The brake force distributor is configured to distribute the required unit brake force between the vehicles of the vehicle unit.

In the above configuration, the brake force distributor distributes the required unit brake force between the vehicles in the vehicle unit. Thus, for example, when a vehicle slides, the required vehicle brake force of each vehicle may be increased or decreased and adjusted so that the required vehicle brake force of the sliding vehicle is decreased and the required vehicle brake force of the remaining vehicles is increased. This limits decreases in the brake force of the entire train when a vehicle slides and shortens the time for calculating the required vehicle brake force of each vehicle of the train. Thus, a suitable brake force may be readily allocated to each vehicle of the train.

In some implementations, the required brake force calculator is configured to calculate the required vehicle brake forces of the vehicles based on braking distances of the vehicles of the vehicle unit and detected decelerations of the vehicles.

One aspect of the present invention is a brake control device for a vehicle unit of a train. The vehicle unit is a sub-set of the train and includes a plurality of vehicles. The brake control device includes a required brake force calculator and a brake force distributor. The required brake force calculator is configured to calculate a plurality of required vehicle brake forces, which are respectively required for the vehicles of the vehicle unit, based on a plurality of detected decelerations respectively corresponding to the vehicles of the vehicle unit and to calculate a required unit brake force, which is the total of the required vehicle brake forces of the vehicles of the vehicle unit. The brake force distributor is configured to distribute the required unit brake force between the vehicles of the vehicle unit.

In the above configuration, the brake force distributor distributes the required unit brake force between the vehicles in the vehicle unit. Thus, for example, when a vehicle slides, the required vehicle brake force of each vehicle may be increased or decreased and adjusted so that the required vehicle brake force of the sliding vehicle is decreased and the required vehicle brake force of the remaining vehicles is increased. This limits decreases in the brake force of the entire train when a vehicle slides and shortens the time for calculating the required vehicle brake force of each vehicle of the train. Thus, a suitable brake force may be readily allocated to each vehicle of the train.

In some implementations, the required brake force calculator is configured to calculate the required vehicle brake forces of the vehicles based on braking distances of the vehicles of the vehicle unit and detected decelerations of the vehicles.

In the above configuration, the required vehicle brake force of each vehicle is calculated based on the deceleration and the braking distance. Thus, in response to a brake command, a brake force may be accurately allocated each vehicle in the vehicle unit.

In some implementations, the required brake force calculator decreases the required vehicle brake force of one of the vehicles as the detected deceleration of the one of the vehicles increases. The required brake force calculator limits a decrease amount of the required vehicle brake force of the one of the vehicles to an upper limit decrease amount, which is a fixed value, when the detected deceleration of the one of the vehicles is larger than or equal to an upper threshold value.

The above configuration limits excessive decreases of the brake force allocated to each vehicle in response to the brake command. This reduces situations in which the driver feels uncomfortable when the driver feels that the brake force has not been generated when applying the brakes along a rising gradient or the like.

Manufacturing variations or the like of mechanical brakes may result in differences in the timing at which mechanical brakes contact the wheels of a vehicle in response to a brake command. In such a case, the allocated brake force increases for vehicles in which the brake readily contacts the wheels and decrease for vehicles in which the brake contacts the wheels later than the other vehicles. Repetitive differences in the brake forces of such vehicles lead to differences in the degree of wear between the mechanical brakes of the vehicles. To address this, in some implementations, each of the vehicles includes a mechanical brake configured to generate brake force with friction. The brake force distributor is configured to restrict differences in the required vehicle brake force of each of the vehicles of the vehicle unit to within a predetermined range. In this configuration, the brake force is limited for each vehicle in the vehicle unit. This reduces differences in the brake force allocated to each vehicle of the vehicle unit even when the mechanical brakes contact the wheels of the vehicle at different timings. Thus, variations are reduced in the degree of wear of the mechanical brakes of each vehicle in the vehicle unit.

In some implementations, when sliding of at least one vehicle of the vehicle unit is detected, the required brake force calculator decreases the required vehicle brake force of the sliding vehicle and increases the required vehicle brake force of a remaining non-sliding vehicle in the vehicle unit.

In the above configuration, when a vehicle slides, the required vehicle brake force of the vehicle is decreased so that the sliding vehicle can be readily re-adhered (recovery from sliding state to a state in which wheel is rotated without sliding on rail and brake force or traction force is generated). Further, in the vehicle unit, the required vehicle brake force of the non-sliding vehicle is increased to limit significant decreases in the required vehicle brake force when a vehicle slides.

In some implementations, when re-adhering of the sliding vehicle is detected, the required brake force calculator increases the required vehicle brake force of the re-adhered vehicle based on the detected deceleration of the re-adhered vehicle and decreases the required vehicle brake force of the remaining non-sliding vehicle.

In the above configuration, when a vehicle is re-adhered, the required vehicle brake force of the re-adhered vehicle is calculated based on the deceleration of the re-adhered vehicle. This allows the suitable brake force to be allocated to the re-adhered vehicle. Thus, in the vehicle unit, the required vehicle brake force of a non-sliding vehicle is decreased to limit large increases in the required unit brake force caused by the re-adhesion of a vehicle.

If a vehicle of a train is re-adhered when the deceleration of the vehicle is large and the brake force is allocated to the vehicle immediately after the re-adhesion, the re-adhered vehicle may slide again depending on the traveling state. To address this, in some implementations, the re-adhered vehicle is allocated with a brake force that increases at a first increasing rate when the detected deceleration of the re-adhered vehicle is larger than a target deceleration that is calculated based on a brake command. The re-adhered vehicle is allocated with a brake force that increases at a second increasing rate when the detected deceleration of the re-adhered vehicle is smaller than the target deceleration. The first increasing rate is smaller than the second increasing rate. In this configuration, the brake force is gradually increased when the deceleration of the re-adhered vehicle is larger than the target deceleration. This limits re-sliding of the re-adhered vehicle. Further, when the vehicle is re-adhered and the deceleration of the re-adhered vehicle is smaller than the target deceleration, the brake force is readily increased so that the suitable brake force is readily allocated to the re-adhered vehicle.

When the deceleration of a vehicle is a negative value, that is, when the required vehicle brake force is calculated based on a deceleration when the vehicle is accelerating, the required vehicle brake force is calculated as a brake force that differs from the vehicle brake force expected from the brake command. To address this, in some implementations, when the detected deceleration of at least one vehicle of the vehicle unit is larger than or equal to zero while the at least one vehicle is traveling, the required brake force calculator calculates the required vehicle brake force of the at least one vehicle based on the detected deceleration of the at least one vehicle. When at least one vehicle of the vehicle unit is still or the detected deceleration of the at least one vehicle is smaller than zero, the required brake force calculator calculates the required brake force of the at least one vehicle based on a brake command without taking into consideration the detected deceleration of the at least one vehicle. In this above configuration, when the deceleration of a vehicle is a negative value, the required vehicle brake force is calculated without taking into consideration the deceleration. This reduces differences of the required vehicle brake force from the vehicle brake force expected from the brake command.

A further aspect of the present invention is a brake control method for a vehicle unit of a train. The vehicle unit is a sub-set of the train and includes a plurality of vehicles. The brake control method includes a required brake force calculation step and a brake force distribution step. The required brake force calculation step is configured to calculate a plurality of required vehicle brake forces, which are respectively required for the vehicles of the vehicle unit, based on a plurality of detected decelerations respectively corresponding to the vehicles of the vehicle unit and to calculate a required unit brake force, which is the total of the required vehicle brake forces of the vehicles of the vehicle unit. The brake force distribution step is configured to distribute the required unit brake force between the vehicles of the vehicle unit.

In some implementations, the required brake force calculation step includes calculating the required vehicle brake forces of the vehicles based on braking distances of the vehicles of the vehicle unit and detected decelerations of the vehicles.

In some implementations, the required brake force calculation step includes decreasing the required vehicle brake force of one of the vehicles as the detected deceleration of the one of the vehicles increases. Further, the required brake force calculation step includes limiting a decrease amount of the required vehicle brake force of the one of the vehicles to an upper limit decrease amount, which is a fixed value, when the detected deceleration of the one of the vehicles is larger than or equal to an upper threshold value.

In some implementations, each of the vehicles includes a mechanical brake configured to generate brake force with friction. The brake force distribution step includes restricting differences in the required vehicle brake force of each of the vehicles of the vehicle unit to within a predetermined range.

In some implementations, the required brake force calculation step includes, when sliding of at least one vehicle of the vehicle unit is detected, decreasing the required vehicle brake force of the sliding vehicle and increasing the required vehicle brake force of a remaining non-sliding vehicle in the vehicle unit.

In some implementations, the required brake force calculation step includes, when re-adhering of the sliding vehicle is detected, increasing the required vehicle brake force of the re-adhered vehicle based on the detected deceleration of the re-adhered vehicle and decreasing the required vehicle brake force of the remaining non-sliding vehicle.

In some implementations, the increasing the required brake force includes allocating the re-adhered vehicle with a brake force that increases at a first increasing rate when the detected deceleration of the re-adhered vehicle is larger than a target deceleration that is calculated based on a brake command. The increasing the required brake force further includes allocating the re-adhered vehicle with a brake force that increases at a second increasing rate when the detected deceleration of the re-adhered vehicle is smaller than the target deceleration. The first increasing rate is smaller than the second increasing rate.

In some implementations, the required brake force calculation step includes when the detected deceleration of at least one vehicle of the vehicle unit is larger than or equal to zero while the at least one vehicle is traveling, calculating the required vehicle brake force of the at least one vehicle based on the detected deceleration of the at least one vehicle. The required brake force calculation step further includes when at least one vehicle of the vehicle unit is still or the detected deceleration of the at least one vehicle is smaller than zero, calculating the required brake force of the at least one vehicle based on a brake command without taking into consideration the detected deceleration of the at least one vehicle.

The brake control device and the brake control method according to the several aspects of the present embodiment allow a suitable brake force to be readily allocated to each vehicle. The brake control device of some implementations reduces, for example, data communication traffic and calculation loads relate to braking control. Other aspects and advantages of the present invention will become apparent from the following description, taken in conjunction with the accompanying drawings, illustrating by way of example the principles of the invention.

The invention, together with objects and advantages thereof, may best be understood by reference to the following description of the presently preferred embodiments together with the accompanying drawings in which:

Fig. 1 is a schematic diagram of a train;
Fig. 2 is a block diagram of vehicle unit formed in the train;
Fig. 3 is a block diagram illustrating one embodiment of a brake control device for the vehicle unit;
Fig. 4 is a flowchart illustrating one embodiment of a brake control,
Fig. 5 is a flowchart of a deceleration limiting control;
Fig. 6 is a flowchart of a slide protection control;
Fig. 7 is a time chart illustrating the operation of the brake control;
Fig. 8 is a map illustrating the relationship of coefficients P and I with respect to the axle speed of a wheel; and
Fig. 9 is a time chart illustrating a re-adhesion control for a brake control in a modified example.

One embodiment of a brake control device will now be described with reference to the drawings.

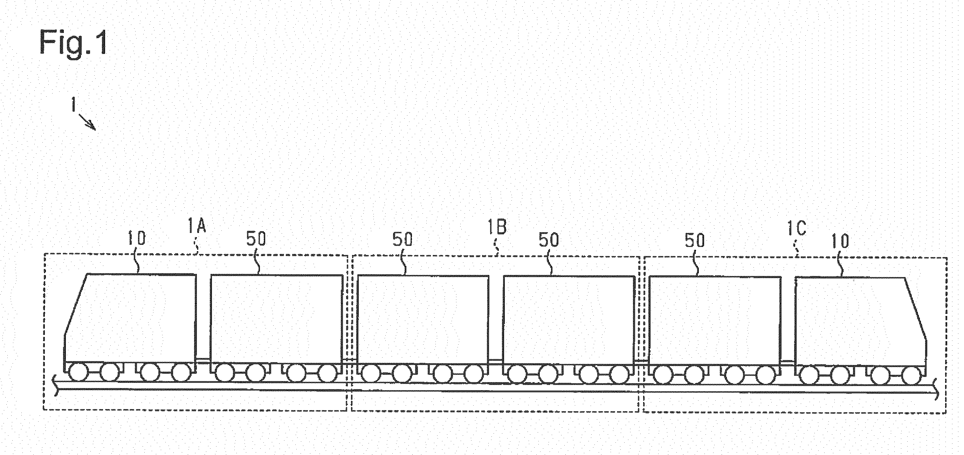

As illustrated in Fig. 1, a train 1 includes a plurality of (e.g., three) vehicle units 1A to 1C that are coupled to one another. The vehicle units 1A and 1C each include a single motor vehicle and a single trailer vehicle that are coupled to each other. The vehicle unit 1B includes two trailer vehicles that are coupled to each other. The vehicle units 1A to 1C may each include three or more vehicles. The train 1 is not limited to three vehicle units and may include two vehicle units. Alternatively, the train 1 may include four or more vehicle units.

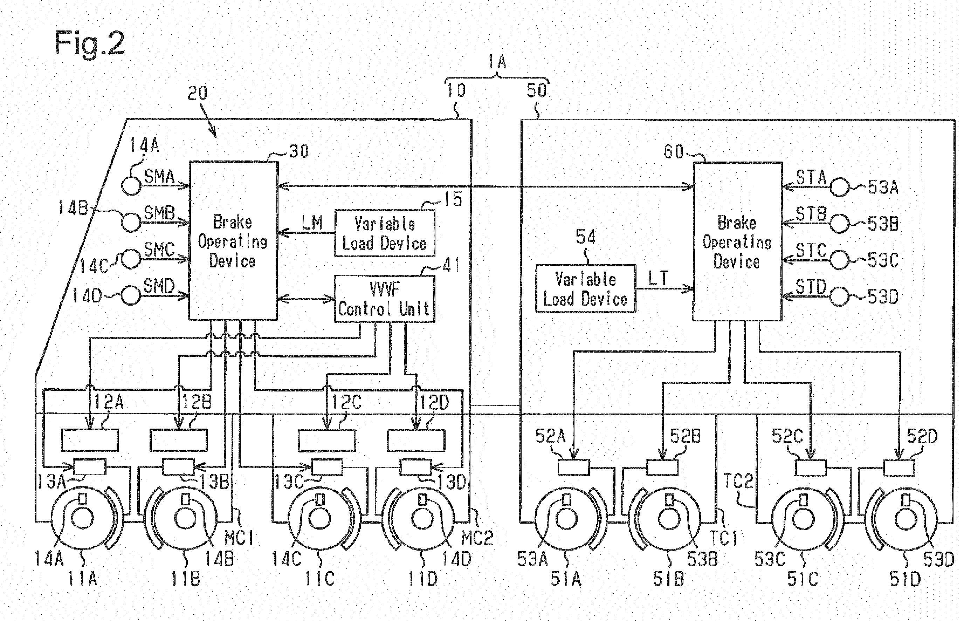

As illustrated in Fig. 2, the vehicle unit 1A includes a brake control device 20 configured to control the braking of the vehicle unit 1A. The brake control device 20 is capable of performing communication with a brake handle apparatus (not illustrated) used by the driver of the train 1 to control the braking of the train 1.

In the vehicle unit 1A, a motor vehicle 10 and a trailer vehicle 50 are capable of performing communication with each other. The vehicle unit 1C has the same structure as the vehicle unit 1A, and the trailer vehicle of the vehicle unit 1B has the same structure as the trailer vehicle 50. Thus, in the description hereafter, the structure of the vehicle unit 1A will be described. The structures of the vehicle units 1B and 1C will not be described.

The motor vehicle 10 includes two motor bogies MC1 and MC2. Wheels 11A and 11B are mounted on the motor bogie MC1, and wheels 11C and 11D are mounted on the motor bogie MC2. The motor vehicle 10 includes electric brakes 12A to 12D and air brakes 13A to 13D. The electric brakes 12A to 12D are each configured to generate regenerative brake force when the wheels 11A to 11D rotate with a motor (not illustrated) that is attached to the corresponding axle. The air brakes 13A to 13D are each configured to generate friction force between each of the wheels 11A to 11G and a corresponding brake shoe using pneumatic pressure (also referred to as brake cylinder (BC) pressure) that operates the brake shoe. Wheel speed sensors 14A to 14D are attached to the wheels 11A to 11D, respectively. The wheel speed sensors 14A to 14D respectively detect axle speeds SMA to SMD, which are the rotation speeds of the wheels 11A to 11D. The air brakes 13A to 13D are examples of mechanical brakes.

Further, the motor vehicle 10 includes a variable load device 15 that detects the weight of the motor vehicle 10 from the load of the motor bogies MC1 and MC2. The variable load device 15 outputs a variable load signal LM that is in accordance with the weight of the motor vehicle 10 and based on an air suspension pressure detected by an air suspension (not illustrated) arranged in each of the motor bogies MC1 and MC2.

The trailer vehicle 50 includes two trailer bogies TC1 and TC2. Wheels 51A and 51B are mounted on the trailer bogie TC1, and wheels 51C and 51D are mounted on the trailer bogie TC2. The trailer bogies TC1 and TC2 include air brakes 52A to 52D. Wheel speed sensors 53A to 53D are attached to the wheels 51A to 51D, respectively. The wheel speed sensors 53A to 53D, which have the same structure as the wheel speed sensors 14A to 14D, respectively detect axle speeds STA to STD, which are the rotation speeds of the wheels 51A to 51D. In the illustrated example, the trailer bogies TC1 and TC2 do not include electric brake. The trailer bogies TC1 and TC2 may include electric brakes.

Further, the trailer vehicle 50 includes a variable load device 54 that detects the weight of the trailer vehicle 50 from the load of the trailer bogies TC1 and TC2. The variable load device 54, which has the same structure as the variable load device 15, outputs a variable load signal LT that is in accordance with the weight of the trailer vehicle 50.

The brake control device 20 includes a brake operating device 30 that controls the air brakes 13A to 13D of the motor vehicle 10, a variable voltage variable frequency (WVF) controller 41 that controls the electric brakes 12A to 12D, and a brake operating device 60 that controls the air brakes 52A to 52D of the trailer vehicle 50. The WVF control unit 41 and the brake operating device 60 of the trailer vehicle 50 are capable of performing communication with the brake operating device 30 of the motor vehicle 10.

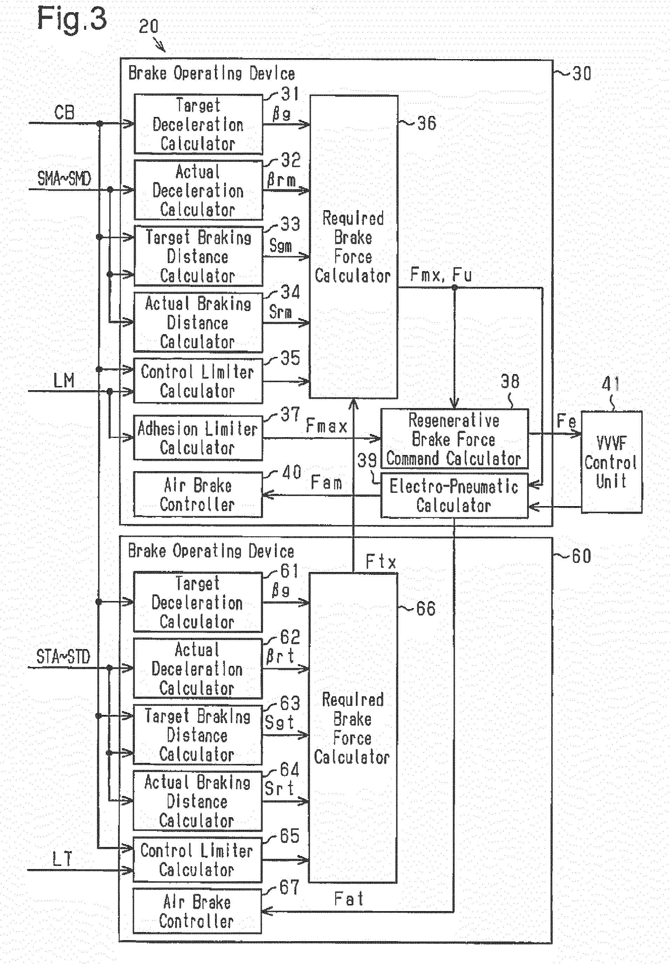

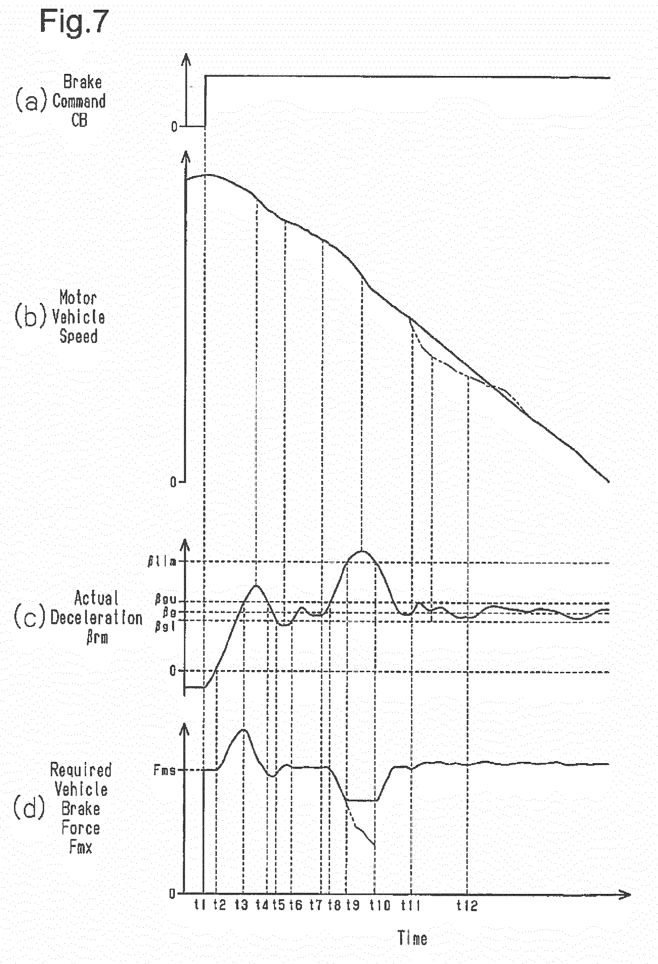

As illustrated in Fig. 3, the brake operating device 30 includes a target deceleration calculator 31, an actual deceleration calculator 32, a target braking distance calculator 33, an actual braking distance calculator 34, a control limiter calculator 35, a required brake force calculator 36, an adhesion limiter calculator 37, a regenerative brake force command calculator 38, an electro-pneumatic calculator 39, and an air brake controller 40. The electro-pneumatic calculator 39 is one example of a brake force distributor. The brake operating device 30 receives a brake command CB from the brake handle apparatus operated by the driver, the axle speeds SMA to SMD of the wheel speed sensors 14A to 14D (refer to Fig. 2), and the variable load signal LM of the variable load device 15 (refer to Fig. 2). The brake handle apparatus may be configured to change the brake force in accordance with a selected one of, for example, seven notches. In such a case, the brake command CB has a value having a constant level that is in accordance with the selected notch (refer to the top chart (a) of Fig. 7).

The target deceleration calculator 31 receives the brake command CB and calculates a target deceleration βg of the motor vehicle 10 based on the brake command CB. For example, the target deceleration βg may be obtained from a map (not illustrated) showing the relationship of the brake command CB and the target deceleration βg. The map is stored in, for example, a memory (not shown) of the brake operating device 30.

The target braking distance calculator 33 receives the brake command CB and the axle speeds SMA to SMD. The target braking distance calculator 33 obtains a braking initial speed and a brake actuation time from the brake command CB (target deceleration 6g) and a reference axle speed (maximum speed when brakes are applied and minimum speed during acceleration such as power running) obtained from the axle speeds SMA to SMD. Then, the target braking distance calculator 33 calculates a target braking distance Sgm from the braking initial speed and the brake actuation time.

The actual deceleration calculator 32 and the actual braking distance calculator 34 receive the axle speeds SMA to SMD. The actual deceleration calculator 32 differentiates the reference axle speed, which is obtained from the axle speeds SMA to SMD, to calculate the actual deceleration βrm of the motor vehicle 10. The actual deceleration βrm may be referred to as the detected deceleration. The actual braking distance calculator 34 integrates the reference axle speed, which is obtained from the axle speeds SMA to SMD, to calculate the actual braking distance Srm of the motor vehicle 10.

The control limiter calculator 35 receives the brake command CB and the variable load signal LM. Based on the brake command CB and the variable load signal LM, the control limiter calculator 35 calculates the upper limit value of a required vehicle brake force Fmx, which is the brake force required for the motor vehicle 10, and the upper limit value and lower limit value of differences between the required vehicle brake force Fmx and a required vehicle brake force Ftx, which is the brake force required for the trailer vehicle 50. Further, the control limiter calculator 35 calculates the upper limit threshold value βlim for the deceleration of the motor vehicle 10 used to limit excessive decreases in the brake force of the vehicle unit 1A.

The required brake force calculator 36 receives the target deceleration βg, the actual deceleration βrm, the target braking distance Sgm, and the actual braking distance Srm of the motor vehicle 10. The required brake force calculator 36 uses the actual deceleration βrm and the actual braking distance Srm to calculate the required vehicle brake force Fmx(n) as shown in equation 1, where n represents the number of times the calculation has been performed.

$$Fmx(n) = Fmx(n-1) + P(\beta g - \beta rm) + I(Sgm - Srm) \qquad \text{equation 1}$$

Here, Fmx(n-1) represents the required vehicle brake force obtained in the previous calculation cycle. Further, P and I represent coefficients obtained in advance through experiments or the like. In the description hereafter, when "n" is not added to the required vehicle brake force, this indicates that the calculation number is not specified.

The required brake force calculator 36 receives the required vehicle brake force Ftx of the trailer vehicle 50. The required brake force calculator 36 adds the required vehicle brake force Fmx of the motor vehicle 10 and the required vehicle brake force Ftx of the trailer vehicle 50 to calculate a required unit brake force Fu, which is the brake force required by the vehicle unit 1A.

The adhesion limiter calculator 37 receives the variable load signal LM. The adhesion limiter calculator 37 multiplies the weight of the motor vehicle 10, which is obtained from the variable load signal LM, by a coefficient that is set in advance to calculate a maximum brake force Fmax for a state in which the motor vehicle 10 is not sliding.

The regenerative brake force command calculator 38 receives the required vehicle brake force Fmx and the maximum brake force Fmax of the motor vehicle 10. The regenerative brake force command calculator 38 calculates a regenerative brake force command value Fe based on a comparison of the required vehicle brake force Fmx and the maximum brake force Fmax. Then, the regenerative brake force command calculator 38 provides the VVVF controller 41 with the regenerative brake force command value Fe. The VVVF controller 41 controls the electric brakes 12A to 12D to generate regenerative brake force in accordance with the regenerative brake force command value Fe.

The electro-pneumatic calculator 39 receives the regenerative brake force from the VVVF controller 41 and the required unit brake force Fu. The electro-pneumatic calculator 39 uses the required unit brake force Fu, the maximum brake force Fmax, and the regenerative brake force to calculate an air brake control assist amount. Further, the electro-pneumatic calculator 39 calculates an air brake force command value Fa from the air brake assist amount. Then, the electro-pneumatic calculator 39 uses the air brake force command value Fa to calculate an air brake force command value Fam, which is used to control the air brakes 13A to 13D of the motor vehicle 10, and an air brake force command value Fat, which is used to control the air brakes 52A to 52D of the trailer vehicle 50. The air brake force command value Fam is a command value for the BC pressure of each of the air brakes 13A to 13D. The air brake force command value Fat is a command value for the BC pressure of each of the air brakes 52A to 52D. The electro-pneumatic calculator 39 calculates the air brake force command values Fam and Fat so that the sum of the brake force applied to the wheels 11A to 11D by the air brakes 13A to 13D, the brake force applied to the wheels 51A to 51D by the brakes 52A to 52D, and the regenerative brake force is equal to the required unit brake force Fu. In a certain embodiment, the air brake force command value Fam corresponds to a first distributed brake force allocated to the motor vehicle 10 (first vehicle) in the vehicle unit 1A. The first distributed brake force corresponds to a first percentage of the required unit brake force Fu. The air brake force command value Fat corresponds to a second distributed brake force allocated to the trailer vehicle 50 (second vehicle) in the vehicle unit 1A. The second distributed brake force corresponds to a second percentage of the required unit brake force Fu.

The air brake controller 40 receives the air brake force command value Fam. Then, the air brake controller 40 generates a control signal in accordance with the air brake force command value Fam and provides the control signal to the air brakes 13A to 13D. The air brakes 13A to 13D force the brake shoes against the wheels 11A to 11D with the BC pressure corresponding to the air brake force command value Fam.

The brake operating device 60 includes a target deceleration calculator 61, an actual deceleration calculator 62, a target braking distance calculator 63, an actual braking distance calculator 64, a control limiter calculator 65, a required brake force calculator 66, and an air brake controller 67. The brake operating device 60 receives the brake command CB, the axle speeds STA to STD of the wheel speed sensors 53A to 53D (refer to Fig. 2), and the variable load signal LT of the variable load device 54 (refer to Fig. 2).

The target deceleration calculator 61 calculates the same target deceleration $\beta g$ as the target deceleration calculator 31.

The target braking distance calculator 63 receives the brake command CB and the axle speeds STA to STD. The target braking distance calculator 63 obtains a braking initial speed and a brake actuation time from the brake command CB (target deceleration $\beta g$) and a reference axle speed obtained from the axle speeds STA to STD. Then, the target braking distance calculator 63 calculates a target braking distance Sgt from the braking initial speed and the brake actuation time.

The actual deceleration calculator 62 and the actual braking distance calculator 64 receive the axles speeds STA to STD. The actual deceleration calculator 62 differentiates the reference axle speed, which is obtained from the axle speeds STA to STD, to calculate the actual deceleration $\beta rt$ of the trailer vehicle 50. The actual deceleration $\beta rt$ may be referred to as the detected deceleration. The actual braking distance calculator 64 integrates the reference axle speed, which is obtained from the axle speeds STA to STD, to calculate the actual braking distance Srt of the trailer vehicle 50.

The control limiter calculator 65 receives the brake command CB and the variable load signal LT. The control limiter calculator 65 calculates the upper limit threshold value $\beta lim$ for the deceleration of the traiter vehicle 50 used to limit excessive decreases in the brake force of the vehicle unit 1A. Further, based on the brake command CB and the variable load signal LT, the control limiter calculator 65 calculates the upper limit value of a required vehicle brake force Ftx for the motor vehicle 10.

The required brake force calculator 66 receives the target deceleration $\beta g$, the actual deceleration $\beta rt$, the target braking distance Sgt, and the actual braking distance Srt of the trailer vehicle 50. The required brake force calculator 66 uses the actual deceleration $\beta rt$ and the actual braking distance Srt to calculate the required vehicle brake force Ftx(n) as shown in equation 2, where n represents the number of times the calculation has been performed.

$$Ftx(n)=Ftx(n-1)+P(\beta g-\beta rt)+I(Sgt-Srt) \qquad \text{equation 2}$$

Here, Ftx(n-1) represents the required vehicle brake force obtained in the previous calculation cycle. Further, coefficients P and I may take the same values as coefficients P and I of equation 1 or may be separately set for the motor vehicle 10 and the trailer vehicle 50.

The air brake controller 67 receives the air brake force command value Fat of the electro-pneumatic calculator 39. Then, the air brake controller 67 generates a control signal in accordance with the air brake force command value Fat and provides the control signal to the air brakes 52A to 52D. The air brakes 52A to 52D force the brake shoes (not illustrated) against the wheels 51A to 51D with the BC pressure corresponding to the air brake force command value Fat.

The brake control device 20 executes brake control to control the braking of the vehicle unit 1A. The brake control includes a required brake force calculation step and a brake force distribution step. In the required brake force calculation step, the brake control device 20 calculates the required vehicle brake forces Fmx and Ftx and the required unit brake force Fu. In the brake force distribution step, the brake control device 20 distributes the required unit brake force Fu between the motor vehicle 10 and the trailer vehicle 50 of the vehicle unit 1A.

In accordance with the traveling condition of the vehicle unit 1A, the brake control device 20 selectively executes one of a deceleration feedback control, which feeds back the actual decelerations βrm and βrt and calculates the required brake forces Fmx and Ftx, and an open loop control, which calculates the required brake forces Fmx and Ftx without feeding back the actual decelerations βrm and βrt. The brake control is repetitively executed in predetermined cycles during a period from when the brake command CB is provided to the brake control device 20 to when the brake command CB is no longer provided.

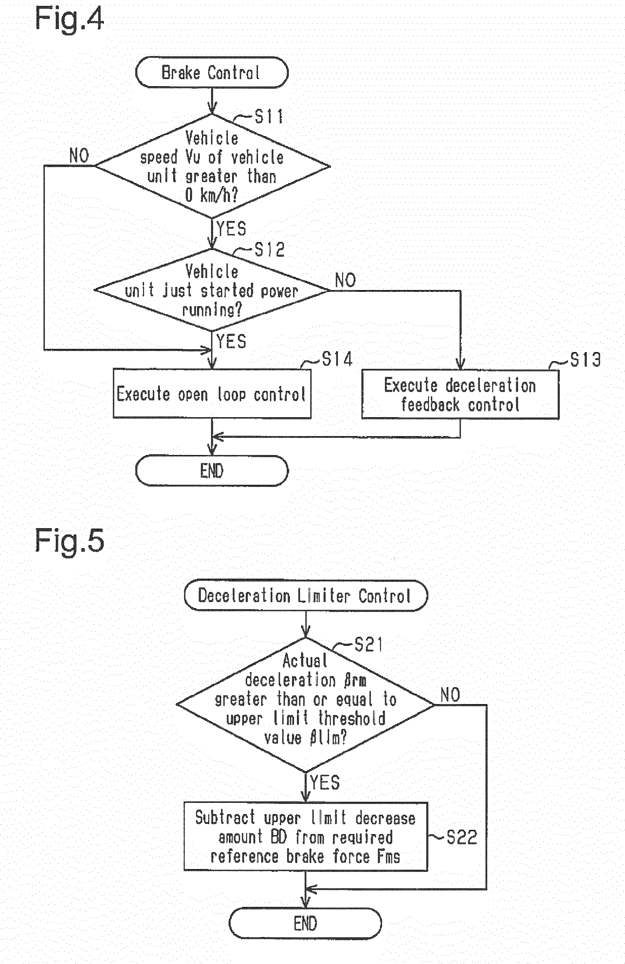

As illustrated in Fig. 4, the brake control device 20 determines whether or not the vehicle speed (velocity) Vu of the vehicle unit 1A is higher than 0 km/h (step S11). Then, the brake control device 20 determines whether or not the vehicle unit 1A has just started power running (step S12). Based on the determinations of steps S11 and S12, the brake control device 20 executes either one of deceleration feedback control and open loop control. For example, when the brake control device 20 makes an affirmative determination in step S11 and a negative determination in step S12, that is, when the vehicle unit 1A is traveling and decelerating, the brake control device 20 executes the deceleration feedback control in step S13. When the brake control device 20 makes a negative determination in step S11 or affirmative determinations in both steps S11 and S12, that is, when the vehicle unit 1A is still or when the vehicle unit 1A is accelerating while traveling, the brake control device 20 executes the open loop control in step S14. Instead of the determinations based on the vehicle unit 1A in steps S11 and S12 of the brake control, determinations may be made based on each of the motor vehicle 10 and the trailer vehicle 50 so that the brake control device 20 executes either one of open loop control and deceleration feedback control in each of the motor vehicle 10 and the trailer vehicle 50.

The vehicle speed Vu of the vehicle unit 1A is calculated from, for example, the axle speeds SMA to SMD of the wheels 11A to 11D of the motor vehicle 10. The brake control device 20 may also calculate the vehicle speed Vu of the vehicle unit 1A based on the axle speeds STA to STD of the wheels 51A to 51D of the trailer vehicle 50.

The determination of whether or not the vehicle unit 1A has just undergone power running may be based on whether or not the actual decelerations βrm and βrt are both 0 Km/h/s or higher. More specifically, when the actual decelerations βrm and βrt are both 0 Km/h/s or higher, the motor vehicle 10 and the trailer vehicle 50 are both decelerating. Thus, the brake control device 20 determines that the vehicle unit 1A has not just started power running.

In the open loop control, the brake control device 20 calculates the required vehicle brake force Fmx of the motor vehicle 10, based on the brake command CB and the variable load signal LM, and the required vehicle brake force Ftx of the trailer vehicle 50, based on the brake command CB and the variable load signal LT. In the description hereafter, the required vehicle forces Fmx and Ftx calculated in the open loop control are referred to as the required reference brake forces Fms and Fts.

In the deceleration feedback control, the brake control device 20 basically corrects the required reference brake forces Fms and Fts based on the deceleration and the braking distance. The deceleration feedback control executed by the brake operating device 30 differs in type from the deceleration feedback control executed by the brake operating device 60 as described below.

As the deceleration feedback control, the brake operating device 60 executes basic feedback control, deceleration limiter control, and slide protection control that will be described later. Further, the brake operating device 60 corrects the required vehicle brake force Ftx, which is calculated in the basic feedback control, based on the deceleration limiter control and the slide protection control.

As the deceleration feedback control, the brake operating device 30 executes basic feedback control, deceleration limiter control, adhesion limiter control, slide protection control, vehicle distribution control, and brake force limiter control that will be described later. The brake operating device 30 corrects the required vehicle brake force Fmx, which is calculated in the basic feedback control, based on the deceleration limiter control, the adhesion limiter control, and the slide protection control. For example, when it is difficult for the air brakes 13A to 13D to output the corrected required vehicle brake forces Fmx, the brake operating device 30 executes the vehicle distribution control and the brake force limiter control, which will be described later, to adjust the distribution of the required unit brake force Fu between the motor vehicle 10 and the trailer vehicle 50 and increase or decrease the required vehicle brake forces Fmx and Ftx.

Each control will now be described in detail.

Basic Feedback Control

When starting the basic feedback control, the brake operating devices 30 and 60 calculate the required reference brake forces Fms and Fts in the same manner as the open loop control. Then, the brake operating devices 30 and 60 feed back the actual decelerations βrm and βrt and the actual braking distances Srm and Srt to the required reference brake forces Fms and Fts to calculate the required vehicle brake forces Fms and Fts. From the next cycle of the basic feedback control, the brake operating devices 30 and 60 feed back the actual decelerations βrm and βrt and the actual braking distances Srm and Srt to the previous required reference brake forces Fmx(n-1) and Ftx(n-1) as shown in equations 1 and 2 to calculate the required vehicle brake forces Fmx(n) and Ftx(n).

To reduce fine fluctuations in the required vehicle brake forces Fmx and Ftx, the brake operating devices 30 and 60 are provided with a tolerable range for the comparison of the actual decelerations βrm and βrt and the target deceleration βg. The tolerable range is set as a range from an upper limit value βgu, which is larger than the target deceleration βg, and a lower limit value βgl, which is smaller than the target deceleration βg. The upper limit value βgu and the lower limit value βgl, which are set in advance through experiments or the like, are used to limit repetitive increases and decreases in the lowered speed of the motor vehicle 10 and the trailer vehicle 50 when changing the brake force during the deceleration of the vehicle unit 1A. When the actual decelerations βrm and βrt are within the tolerable range, the brake operating devices 30 and 60 correct the required vehicle brake forces Fmx and Ftx using 0 as the deceleration term in equations 1 and 2.

Deceleration Limiter Control

The deceleration limiter control limits excessive decreases in the required vehicle brake forces Fmx and Ftx based on the actual decelerations βrm and βrt.

The procedures for processing the deceleration limiter control will now be described with reference to the flowchart of Fig. 5. The procedures of the deceleration limiter control executed by the brake operating device 30 will be described below. The procedures of the deceleration limiter control executed by the brake operating device 60 are the same as the procedures of the deceleration limiter control executed by the brake operating device 30 and thus will not be described.

In step S21, the brake operating device 30 determines whether or not the actual deceleration βrm is larger than or equal to the upper limit threshold value βlim. The upper limit threshold value βlim, which is set in advance through experiments, is a value at which the driver may feel uncomfortable when sensing a difference in the expected deceleration of the vehicle unit 1A during the application of the brakes from the actual deceleration of the vehicle unit 1A.

When an affirmative determination is made in step S21, the brake operating device 30 subtracts an upper limit decrease amount BD from the required reference brake force Fms in step S22 to calculate the required vehicle brake force Fmx. The upper limit decrease amount BD, which is set in advance through experiments, is a smaller decrease amount of the brake force than the decrease amount of the brake force that may make the driver feel uncomfortable. When a negative determination is made in step S21, the processing is terminated.

In step S22, the brake operating device 30 may calculate the required vehicle brake force Fmx by subtracting the upper limit decrease amount BD from the required vehicle brake force Fmx(n-1) calculated in the previous cycle. Alternatively, the brake operating device 30 may replace the required vehicle brake force Fmx with a required set brake force, which is a predetermined required vehicle brake force.

Adhesion Limiter Control

The brake operating device 30 executes the adhesion limiter control during the deceleration feedback control. During the adhesion limiter control, the brake operating device 30 controls the electric brakes 12A to 12D and the air brakes 13A to 13D so that the required vehicle brake force Fmx of the motor vehicle 10 becomes smaller than or equal to the maximum brake force Fmax, which is calculated by the adhesion limiter calculator 37.

Slide Protection Control

The adhesion limiter control limits sliding of the vehicle unit 1A. However, some of the wheels 11A to 11D and 51A to 51D may slide due to changes in the friction coefficient caused by the weather or by the rail surface conditions. Thus, when the brake operating devices 30 and 60 detects sliding of at least one of the wheels 11A to 11D and 51A to 51D, the brake operating devices 30 and 60 execute the slide protection control to limit the sliding. The slide protection control includes a slide distribution control, which decreases the brake force applied to the sliding wheel and increases the brake force applied to the non-sliding wheels, and a re-adhesion control that controls the brake force applied to the re-adhered wheel when the sliding wheel is re-adhered.

When the brake operating device 30 detects that any one of the axle speeds SMA to SMD of the wheels 11A to 11D is excessively low, the brake operating device 30 determines that the wheel corresponding to the excessively low axle speed is sliding. When the brake operating device 60 detects that any one of the axle speeds STA to STD of the wheels 51A to 51D is excessively low, the brake operating device 60 determines that the wheel corresponding to the excessively low axle speed is sliding.

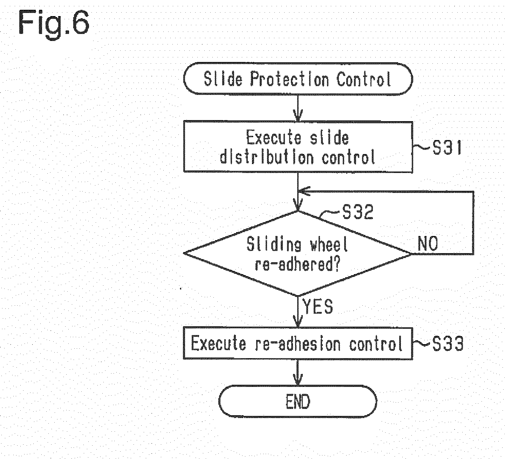

The brake operating device 30 executes the slide protection control through the procedures illustrated in Fig. 6. The procedures of the slip protection control executed by the brake operating device 60 are the same as the procedures of the slip protection control executed by the brake operating device 30 and thus will not be described.

In step S31, the brake operating device 30 executes the slide distribution control, For example, when the brake operating device 30 detects that the wheel 11A is sliding, the brake operating device 30 sets the BC pressure of the air brake 13A to 0 and increases the BC pressure of the air brakes 13B to 13D so that the target deceleration βg of the motor vehicle 10 does not decrease. When the brake force applied to the wheel 11A is set to 0, the required vehicle brake force becomes insufficient for reaching the target deceleration βg. Thus, for example, the brake operating device 30 distributes the BC pressure corresponding to the insufficient required vehicle brake force and adds the distributed BC pressure to the air brakes 13B to 13D. When the brake operating device 30 detects sliding of the wheel 11A, the brake operating device 30 may set the air brake 13A to a predetermined BC pressure that is larger than 0. It is only necessary that the BC pressure be set to limit sliding of the wheel 11A when sliding of the wheel is detected.

Subsequent to the execution of the slide distribution control, in step S32, the brake operating device 30 determines whether or not the sliding wheel has become re-adhered to the rail. For example, when the wheel 11A slides, the brake operating device 30 determines that the wheel 11A has re-adhered when the difference of the axle speed SMA from the axle speeds SMB to SMD of the wheels 11B to 11D becomes lower than or equal to a threshold value. The threshold value, which is set in advance through experiments, is the maximum value of differences in the axle speeds when the wheels are not sliding.

When a negative determination is made in step S32, the brake operating device 30 continues the slide distribution control. When an affirmative determination is made in step S32, the brake operating device 30 executes the re-adhesion control instead of the slide distribution control.

In the re-adhesion control, for example, when re-adhesion of the wheel 11A is detected after the wheel 11A slides, the brake operating device 30 controls the increasing rate of the brake force applied to the wheel 11A by the air brake 13A. More specifically, if re-adhesion of the wheel 11A is detected, the brake operating device 30 controls the BC pressure of the air brake 13A so that an increasing rate (first increasing rate) of the BC pressure of the air brake 13A for when the actual deceleration βrm of the motor vehicle 10 is larger than or equal to the target deceleration βg is smaller than an increasing rate (second increasing rate) of the BC pressure of the air brake 13A for when the actual deceleration βrm is smaller than the target deceleration βg.

Further, if the actual deceleration βrm of the motor vehicle 10 is smaller than the target deceleration βg when re-adhesion of the wheel 11A is detected, the brake operating device 30 controls the BC pressure of the air brake 13A so that the increasing rate of the BC pressure of the air brake 13A decreases as the difference between actual deceleration βrm and the target deceleration βg decreases.

Vehicle Distribution Control

The vehicle distribution control sets the distribution ratio of the air brake force command value Fam of the motor vehicle 10 and the air brake force command value Fat of the trailer vehicle 50 in the air brake force command value Fa from the air brake control assist amount calculated by the electro-pneumatic calculator 39.

Basically, the brake operating device 30 sets the distribution ratio of the air brake force command values Fam and Fat based on the weight of the motor vehicle 10 and the weight of the trailer vehicle 50.

With the brake control device 20, either one of the required vehicle brake forces Fmx and Ftx of the motor vehicle 10 and the trailer vehicle 50 calculated by the deceleration limiter control, the adhesion limiter control, and the slide protection control may be smaller than or larger than the required vehicle brake forces Fmx and Ftx calculated by the feedback control. Thus, in the vehicle distribution control, when the required unit brake force Fu of the vehicle unit 1A can be supplemented with the required vehicle brake forces Fmx and Ftx, the brake control device 20 changes the distribution ratio of the air brake force command values Fam and Fat to adjust the required vehicle brake forces Fmx and Ftx. In the vehicle distribution control, when the required unit brake force Fu of the vehicle unit 1A cannot be supplemented with the required vehicle brake forces Fmx and Ftx, the brake control device 20 separately controls the other vehicle units 1B and 1C of the train 1 to readily apply brake force that is suitable for the train 1.

For example, the deceleration limiter control may lower the required vehicle brake force Fmx of the motor vehicle and the required vehicle brake force Ftx of the trailer 50. In such a case, the brake control device 20 cannot supplement the required unit brake force Fu of the vehicle unit 1A with the required vehicle brake forces Fmx and Ftx in the vehicle distribution control. Thus, the brake control device 20 detects decreases in the actual decelerations of the other vehicle units 1B and 1C in the train 1 and readily increases and corrects the brake force. This limits decreases in the required brake force of the train 1.

Further, for example, when sliding of a plurality of wheels is detected in the motor vehicle 10, the required vehicle brake force Fmx of the motor vehicle 10 may be insufficient when increasing the BC pressure of the air brake for each non-sliding wheel in the motor vehicle 10 with the slide protection control. In such a case, the brake operating device 60 and the brake operating devices of the other vehicle units 1B and 1C in the train 1 detects a decrease in the actual deceleration during the vehicle distribution control and corrects the air brake force command value to increase the required vehicle brake force of the trailer vehicle 50 and the other vehicle units 1B and 1C in the train 1. This limits decreases in the brake force required by the train 1 when sliding occurs in the motor vehicle 10.

Additionally, for example, in the motor vehicle 10, when re-adhesion of a plurality of wheels that have been sliding is detected, the increasing rate is large for the required vehicle brake force Fmx of the motor vehicle 10. This may increase the required unit brake force Fu of the vehicle unit 1A. In such a case, the brake operating device 60 and the brake operating devices of the other vehicle units 1B and 1C in the train 1 correct the air brake force command value in the vehicle distribution control when detecting an increase in the actual deceleration to decrease the required vehicle brake force of the trailer vehicle 50 and the other vehicle units in the train 1. This limits increases in the required brake force of the train 1 caused by re-adhesion in the motor vehicle 10.

Brake Force Limiter Control

Due to variations between products or the like of the air brakes 13A to 13D and 52A to 52D, the timing at which the air brakes 13A to 13D output a braking force may differ from the timing at which the air brakes 52A to 52D output a brake force. For example, when the air brakes 52A to 52D output the brake force at an earlier timing than the air brakes 13A to 13D, the brake force of the air brakes 52A to 52D excessively rises. Further, since the air brakes 52A to 52D act to output the required unit brake force Fu of the vehicle unit 1A, the brake force of the air brakes 13A to 13D may become excessively low. In such a manner, when the air brakes 13A to 13D and 52A to 52D repeat braking, wear occurs in the brake shoes of the air brakes 52A to 52D earlier than the brake shoes of the air brakes 13A to 13D.

Thus, the brake control device 20 executes the brake force limiter control to correct the distribution ratio of the required vehicle brake forces Fmx and Ftx so that the distribution ratio of the required vehicle brake force Fmx of the motor vehicle 10 of the vehicle unit 1A and the required vehicle brake force Ftx of the trailer vehicle 50 is within a predetermined range of a lower distribution limit value DL or greater to an upper distribution limit value DU or less. That is, the brake control device 20 limits differences between the required vehicle brake force Fmx of the motor vehicle 10 and the required vehicle brake force Ftx of the trailer vehicle 50 to be within the predetermined range. The brake force limiter control limits the required vehicle brake forces Fmx and Ftx as described above. Thus, depending on the setting of the upper distribution limit value DU and the lower distribution limit value DL, the brake force applied to the vehicle unit 1A applied to the vehicle unit may be temporarily smaller than or larger than the required unit brake force Fu.

With reference to the time chart of Fig. 7, one example of the brake control will now be described. Fig. 7 illustrates the vehicle speed (the second chart (b)), the actual deceleration βrm (the third chart (c)), and the required vehicle brake force Fmx (the bottom chart (d)) of the motor vehicle 10. As long as sliding does not occur, the actual deceleration βrm of the trailer vehicle 50 shifts in the same manner as the motor vehicle 10. In the description hereafter, the elements of the vehicle units 1A including reference characters indicate elements of the vehicle unit 1A illustrated in Figs. 1 to 3.

At timing t1, when the driver operates the brake handle apparatus, the brake control device 20 is provided with the brake command CB. In response to the brake command CB, the brake control device 20 starts the brake control. At time t1, the actual deceleration βrm is a negative value, that is, the motor vehicle 10 (vehicle unit 1A) is accelerating. Thus, the brake control device 20 executes the open loop control. At time t2, the actual deceleration βrm becomes larger than 0 as the motor vehicle 10 (vehicle unit 1A) decelerates. Thus, the brake control device 20 executes the deceleration feedback control.

During the period from time t2 to time t7, the brake control device 20 controls the required vehicle brake force Fmx with the basic feedback control. In particular, when the actual deceleration βrm shifts within the tolerable range during the period from time t2 to time t7, the brake control device 20 uses 0 as the deceleration term of equation 1 to calculate the required vehicle brake force Fmx. When the actual deceleration βrm is larger than the upper limit value βgu of the tolerable range (time t3 to time t4), the required vehicle brake force Fmx decreases as time elapses. When the actual deceleration βrm is smaller than the lower limit value βgl of the tolerable range (e.g., t5 to t6), the required vehicle brake force Fmx increases as time elapses.

When the vehicle unit 1A is traveling along a rising gradient section during the period from time t7 to t10, the actual deceleration βrm rapidly increases as time elapses. During the period from time t9 to time t10, the actual deceleration βrm exceeds the upper limit value βgu.

The double-dashed line in the bottom chart (d) of Fig. 7 shows a comparative example in which the required vehicle brake force Fmx decreases as time elapses during the period from time t9 to t10 when the brake operating device 30 does not execute the deceleration limiter control. The required vehicle brake force Fmx also decreases as time elapses during the period from time t9 to t10. Thus, the required vehicle brake force Fmx is excessively decreased during the period from time t9 to t10.

The brake control device 20 of the present embodiment subtracts the upper limit decrease amount BD from the required reference brake force Fms when the actual deceleration βrm becomes larger than or equal to the upper limit threshold value βlim at time t9 due to the deceleration limiter control. Thus, as shown by the solid line in the bottom chart (d) of Fig. 7, during a period such as from time t9 to t10 in which the actual deceleration βrm is larger than or equal to the upper limit value βlim, decreases in the required vehicle brake force Fmx as time elapses are limited. This limits excessive decreases in the required vehicle brake force Fmx that occur in the comparative example.

As shown by the double-dashed line in the second chart (b) of Fig. 7, at time t11, when, for example, the axle speed SMA of the wheel 11A rapidly decreases and becomes lower than the axle speeds SMB to SMD of the other wheels 11B to 11D, that is, when sliding of the wheel 11A is detected, the brake operating device 30 executes slide distribution control and sets the BC pressure of the air brake 13A to 0. This limits increases in the actual deceleration βrma of the wheel 11A to cause re-adhesion of the wheel 11A. In the slide distribution control, the brake operating device 30 increases the BC pressure of the air brakes 13B to 13D of the non-sliding wheels 11B to 11D. As a result, as shown in the bottom chart (d) of Fig. 7, decreases in the required vehicle brake force Fmx are limited during the period from time t11 to time t12. When re-adhesion of the wheel 11A is detected at time t12, the re-adhesion control is executed in lieu of the slide distribution control. As shown by the double-dashed line in the third chart (c) of Fig. 7, at time t12, the actual deceleration βrm is smaller than the target deceleration βg but approximate to the target decoration βg. Thus, the increasing rate of the BC pressure of the air brake 13A is decreased.

The electro-pneumatic calculator 39 may be arranged in a selected one of the plurality of vehicles in the vehicle unit 1A. In the illustrated example, the electro-pneumatic calculator 39 is arranged in the motor vehicle 10 of the vehicle unit 1A and not in the trailer vehicle 50. The required brake force calculators 36 and 66 may cooperate to function as a brake force calculator. Data communication in the vehicle unit 1A, that is, data communication between the brake operating devices 30 and 60 may be referred to as intra-unit communication. The distribution of the brake force in the vehicle unit 1A may be referred to as intra-unit distribution.

The present embodiment has the advantages described below.

(1) In the deceleration feedback control, the brake control device 20 distributes the required unit brake force between the motor vehicle 10 and the trailer vehicle 50 in the vehicle unit 1A. Thus, for example, when the motor vehicle 10 slides, the brake control device 20 adjusts the required vehicle brake forces Fmx and Ftx in the vehicle unit 1A to decrease the required vehicle brake force Fmx of the motor vehicle 10 and increase the required vehicle brake force Ftx of the trailer vehicle 50. This limits decreases in the brake force of the entire train 1 when a vehicle slides. In contrast, in a comparative example configured so that each vehicle controls its brake force, the brake force of the entire train may greatly decrease when any one of the vehicles slides.

In the present embodiment, the vehicle units 1A to 1C separately control its required unit brake force Fu. This shortens the time for calculating the required brake force of every one of the vehicles in the train. Thus, the brake force may be readily allocated to every one of the vehicles. In contrast, in a comparative example in which the required brake force of an entire train is controlled with a single central processing unit, the calculation of the required brake force for every one of the vehicles in the train takes a long time.

(2) In the deceleration feedback control, the brake control device 20 calculates the required vehicle brake forces Fmx and Ftx based on the actual decelerations βrm and βrt and the actual braking distances Srm and Srt. Thus, in response to the brake command CB, the suitable brake force may be accurately allocated to the motor vehicle 10 and the trailer vehicle 50.

(3) In the deceleration limiter control, when the actual decelerations βrm and βrt are larger than or equal to the upper threshold value βlim, the brake control device 20 subtracts the upper limit decrease amount BD from the required reference brake forces Fms and Fts to calculate the required vehicle brake forces Fmx and Ftx. Thus, excessive decreases of the required unit brake force Fu of the vehicle unit 1A are limited when, for example, the vehicle unit 1A is traveling along a rising gradient section. This reduces situations in which the driver feels uncomfortable due to a difference between the expected deceleration of the vehicle unit 1A when applying the brakes and the actual deceleration of the vehicle unit 1A. Thus, when applying the brakes, the driver will not feel that the train 1 is not generating brake force.

(4) In the brake limiter control, the brake control device 20 limits the brake force of the motor vehicle 10 and the brake force of the trailer 50 within a predetermined range. This decreases the difference between the degree of wear of the air brakes 13A to 13D in the motor vehicle 10 and the degree of wear of the air brakes 52A to 52D in the trailer vehicle 50.

(5) In the vehicle distribution control, when, for example, detecting sliding of the motor vehicle 10, the brake control device 20 decreases the required vehicle brake force Fmx of the motor vehicle 10 and increases the required vehicle brake force Ftx of the trailer vehicle 50. This expedites re-adhesion of the motor vehicle 10 and limits decreases in the required unit brake force Fu.

12

(6) In the vehicle distribution control, the brake control device 20 increases, for example, the required vehicle brake force Fmx of the motor vehicle 10 when the motor vehicle 10 is re-adhered and decreases the required vehicle brake force Ftx of the trailer vehicle 50 including non-sliding wheels. This allows a suitable brake force to be allocated to the motor vehicle, while limiting increases in the required unit brake force Fu.

(7) In the re-adhesion control, the brake control device 20 sets a smaller increasing rate for the brake force allocated to the re-adhered wheel when the actual deceleration $\beta$rm and $\beta$rt of the re-adhered wheel is larger than the target deceleration $\beta$g than the increasing rate for the brake force allocated to the re-adhered wheel when the actual deceleration $\beta$rm and $\beta$rt of the re-adhered wheel is smaller than the target deceleration $\beta$g. This gradually increases the brake force when the actual deceleration $\beta$rm and $\beta$rt of the re-adhered wheel is larger than the target deceleration $\beta$g so that the re-adhered wheel does not slide again. Further, the brake force is rapidly increased when the actual deceleration $\beta$rm and $\beta$rt of the re-adhered wheel is smaller than the target deceleration $\beta$g. This readily allocates the suitable brake force to the re-adhered wheel.

(8) The brake control device 20 selects one of the open loop control and the deceleration feedback control in accordance with the traveling condition of the vehicle unit 1A. In this manner, the selection of the open loop control and the deceleration feedback control in accordance with the traveling state of the vehicle unit 1A allows for a further suitable brake force to be allocated to the vehicle unit 1A.

(9) When, for example, the wheel 11A of the motor vehicle 10 slides, the brake control device 20 executes the slide protection control to decrease the brake force of the wheel 11A and increase the brake force of the wheels 11B to 11 D. This expedites re-adhesion of the wheel 11A and limits decreases in the required vehicle brake force Fmx of the motor vehicle 10. When a wheel of the trailer vehicle 50 slides, the slide protection control controls the brake force of each wheel in the same manner. This limits decreases in the required vehicle brake force of the trailer vehicle 50.

It should be apparent to those skilled in the art that the present invention may be embodied in many other specific forms without departing from the spirit or scope of the invention. Particularly, it should be understood that the present invention may be embodied in the following forms.

Modified Example 1

In the above embodiment, the required vehicle brake force Fmx of the motor vehicle 10 and the required vehicle brake force Ftx of the trailer vehicle 50 have been calculated. The required vehicle brake forces Fmx and Ftx may be calculated as described below.

(A) The brake operating device 30 may calculate a plurality of required bogie brake forces respectively corresponding to the motor bogies MC1 and MC2. Then, the brake operating device 30 may add the required bogie brake forces of the motor bogies to calculate the required vehicle brake force Fmx. The required bogie brake force of the motor bogie MC1 may be calculated by, for example, substituting the average value of the actual deceleration $\beta$rma and $\beta$rmb for the actual deceleration $\beta$rm in equation 1 and substituting the average value of the actual braking distance Srma and Srmb for the actual braking distance Srm in equation 1. In the same manner, the brake operating device 60 may calculate the required vehicle brake force of the trailer vehicle 50 from the required bogie brake forces of the trailer bogies TC1 and TC2.

(B) The brake operating device 30 may calculate a plurality of required wheel brake forces respectively corresponding to the wheels 11A to 11D. Then, the brake operating device 30 may add the required wheel brake forces to calculate the required vehicle brake force Fmx. The required bogie brake force of, for example, the wheel 11A may be calculated by substituting the actual deceleration $\beta$rma for the actual deceleration $\beta$rm in equation 1 and substituting the actual braking distance Srma for the actual braking distance Srm in equation 1. In the same manner, the brake operating device 60 may calculate the required vehicle brake force Ftx of the trailer vehicle 50 from the required wheel brake forces of the wheels 51A to 51 D,

Modified Example 2

In the above embodiment, equations 1 and 2 are used to calculate the required vehicle brake forces Fmx and Ftx of the trailer vehicle 50. Instead, equations 3 and 4, which are shown below, may be used to calculate the required vehicle brake forces Fmx and Ftx. The term of the braking distance is omitted in equations 3 and 4.

$$Fmx(n) = Fmx(n-1) + \{K(\beta g - \beta rm) \times Vk\} \qquad \text{equation 3}$$

$$Ftx(n)=Ftx(n-1)+\{K(\beta g-\beta rt)\times Vk\} \qquad \text{equation 4}$$

Coefficient K, which corresponds to Fmx(n), is a value corresponding to the weight of the motor vehicle 10, and set in advance through experiments or the like. Coefficient Vk is a value corresponding to the axle speeds SMA to SMD and STA to STC of the wheels 11A to 11D and set in advance through experiments or the like.

Modified Example 3

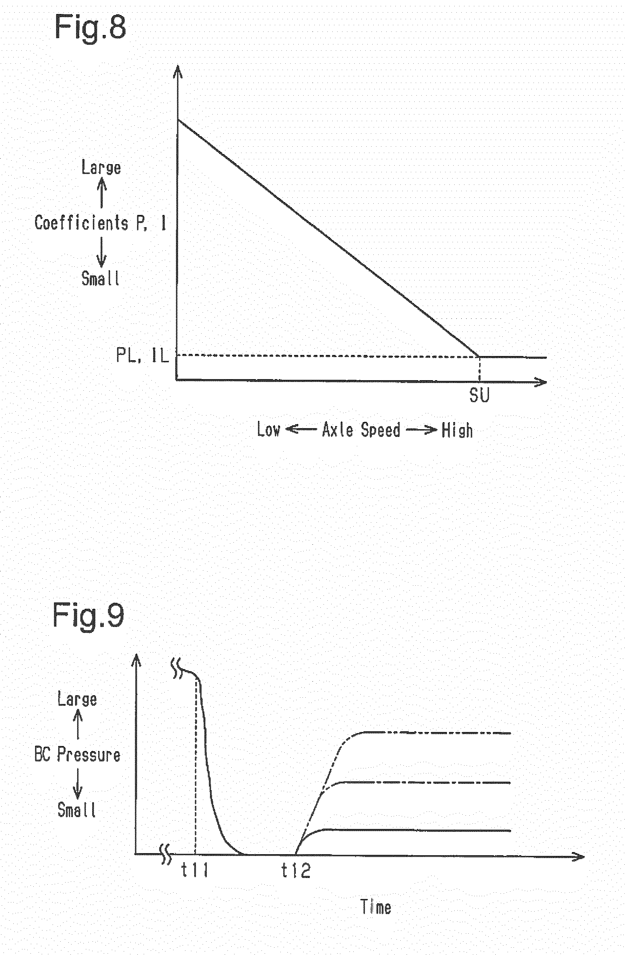

In equations 1 and 2, coefficient P, which is related to the deceleration, and coefficient I, which is related to the braking distance, are constants. However, coefficients P and I may be variables corresponding to the axle speed. For example, as illustrated in the map of Fig. 8, coefficients P and I may be set to decrease as the axle speed increases. The map of Fig. 8 may be stored in the memories (not illustrated) of the brake operating devices 30 and 60. As illustrated in Fig. 8, when the axle speed is greater than or equal to the upper limit speed SU, coefficients P and I may be set to the lower limit values PL and IL.

In this configuration, when the axle speed is low, the influence of the actual decelerations βrm and βrt and the actual braking distances Srm and Srt increases. When the axle speed is high, the influence of the actual decelerations βrm and βrt and the actual braking distances Srm and Srt decreases. Thus, the behavior of the train 1 becomes close to the behavior of conventional trains when the driver operates the brake handle apparatus to decelerate the train. Coefficient Vk in equations 3 and 4 may also be a variable corresponding to the axle speed in the same manner as coefficients P and I.

Modified Example 4

In the re-adhesion control of the above embodiment, when re-adhesion of a vehicle including a wheel that has been detected sliding, the BC pressure of the air brake of the re-adhered wheel is controlled to be constant based on the comparison of the actual decelerations βrm and βrt with the target deceleration βg, However, the re-adhesion control does not have to be executed in such a manner. For example, as illustrated in Fig. 9, the BC pressure of the air brake corresponding to the re-adhered wheel may be changed based on the comparison of the actual deceleration of the entire vehicle unit 1A and the target deceleration βg. Further, for example, when the actual deceleration of the entire vehicle unit 1A is larger than or equal to the target deceleration βg, the BC pressure of the air brake corresponding to the re-adhered wheel is computed to increase as the difference between the actual deceleration of the entire vehicle unit 1A and the target deceleration βg increases. The actual deceleration of the entire vehicle unit 1A is obtained from the actual deceleration of the reference axle speed. Further, when the actual deceleration of the entire vehicle unit 1A is sufficiently close to the target deceleration βg, the BC pressure of the air brake corresponding to the re-adhered wheel may be set to 0.

This configuration avoids a situation in which a re-adhered wheel slides again due to allocation of an excessive brake force to the re-adhered wheel. Further, this configuration avoids a situation in which the riding comfort of the vehicle unit 1A deteriorates due to a sudden change in the actual deceleration of each wheel.

Modified Example 5

In the brake limiter control of the above embodiment, the required vehicle brake forces Fmx and Ftx are corrected so that the distribution ratio of the required vehicle brake force Fmx of the motor vehicle 10 and the required vehicle brake force Ftx of the trailer vehicle 50 in the motor vehicle 10 of the vehicle unit 1A is within the predetermined range. However, the required vehicle brake forces Fmx and Ftx do not have to be distributed in such a manner. For example, the brake operating device 30 may calculate the required vehicle brake forces Fmx and Ftx without executing the brake force limiter control before correcting the required vehicle brake forces Fmx and Ftx so that differences in the required vehicle brake forces Fmx and Ftx are included in a predetermined range due to brake force limiter control.

Modified Example 6

The brake control of the above embodiment switches between the deceleration feedback control and the open loop control in accordance with the vehicle speed Vu and actual deceleration of the vehicle unit 1A. However, the deceleration feedback control and the open loop control may be switched based on other conditions. For example, the deceleration feedback control and the open loop control may be switched in accordance with a notch of the brake handle apparatus in addition to the speed and deceleration of the vehicle unit 1A. For example, when the brake handle apparatus includes seven notches, the deceleration feedback control is executed when a high-level notch (fourth notch or higher) is selected.

The invention is not limited to the foregoing embodiments and various changes and modifications of its components may be made without departing from the scope of the present invention. Also, the components disclosed in the foregoing embodiments may be assembled in any combination for embodying the present invention. For example, some of the components may be omitted from all components disclosed in the foregoing embodiments. Further, components in different embodiments may be appropriately combined. The scope of the present invention and equivalence of the present invention are to be understood with reference to the appended claims.

**Claims**

1.  A brake control device (20) for a vehicle unit (1A) of a train (1), wherein the vehicle unit (1A) is a sub-set of the train (1) and includes a plurality of vehicles (10, 50), the brake control device (20) being **characterized by**:

    a required brake force calculator (36, 66) configured to calculate a plurality of required vehicle brake forces (Fmx, Ftx), which are respectively required for the vehicles (10, 50) of the vehicle unit (1A), based on a plurality of detected decelerations (6rm, |3rt) respectively corresponding to the vehicles (10, 50) of the vehicle unit (1A) to calculate a required unit brake force (Fu), which is the total of the required vehicle brake forces (Fmx and Ftx) of the vehicles (10, 50) of the vehicle unit (1A); and
    a brake force distributor (39) configured to distribute the required unit brake force (Fu) between the vehicles (10, 50) of the vehicle unit (1A).

2.  The brake control device (20) according to claim 1, **characterized in that** the required brake force calculator is configured to calculate the required vehicle brake forces (Fmx, Ftx) of the vehicles (10, 50) based on braking distances (Srm, Srt) of the vehicles (10, 50) of the vehicle unit (1A) and detected decelerations ($\beta$rm, $\beta$rt) of the vehicles (10, 50),

3.  The brake control device (20) according to claim 1 or 2, **characterized in that**:

    the required brake force calculator (36, 66) decreases the required vehicle brake force (Fmx, Ftx) of one of the vehicles (10, 50) as the detected deceleration ($\beta$rm, $\beta$rt) of the one of the vehicles increases; and
    the required brake force calculator (36, 66) limits a decrease amount of the required vehicle brake force (Fmx, Ftx) of the one of the vehicles (10, 50) to an upper limit decrease amount (BD), which is a fixed value, when the detected deceleration ($\beta$rm, $\beta$rt) of the one of the vehicles is larger than or equal to an upper threshold value ($\beta$lim).

4.  The brake control device (20) according to any one of the preceding claims, wherein each of the vehicles (10, 50) includes a mechanical brake (13A-13D) configured to generate brake force with friction, the brake control device (20) being **characterized in that**
    the brake force distributor (39) is configured to restrict differences in the required vehicle brake force (Fmx, Ftx) of each of the vehicles (10, 50) of the vehicle unit (1A) to within a predetermined range.

5.  The brake control device (20) according to any one of the preceding claims, **characterized in that** when sliding of at least one vehicle (10) of the vehicle unit (1A) is detected, the required brake force calculator (36, 66) decreases the required vehicle brake force (Fmx) of the sliding vehicle (10) and increases the required vehicle brake force (Ftx) of a remaining non-sliding vehicle (50) in the vehicle unit (1A).

6.  The brake control device (20) according to claim 5, **characterized in that** when re-adhering of the sliding vehicle (10) is detected, the required brake force calculator (36, 66) increases the required vehicle brake force (Fmx) of the re-adhered vehicle (10) based on the detected deceleration ($\beta$rm) of the re-adhered vehicle (10) and decreases the required vehicle brake force (Ftx) of the remaining non-sliding vehicle (50).

7.  The brake control device (20) according to claim 6, **characterized in that**
    the re-adhered vehicle (10) is allocated with a brake force that increases at a first increasing rate when the detected deceleration ($\beta$rm) of the re-adhered vehicle (10) is larger than a target deceleration ($\beta$g) that is calculated based on a brake command,
    the re-adhered vehicle (10) is allocated with a brake force that increases at a second increasing rate when the detected deceleration ($\beta$rm) of the re-adhered vehicle (10) is smaller than the target deceleration ($\beta$g), and
    the first increasing rate is smaller than the second increasing rate.

**8.** The brake control device (20) according to any one of the preceding claims, **characterized in that**
when the detected deceleration (βrm) of at least one vehicle (10) of the vehicle unit (1A) is larger than or equal to zero while the at least one vehicle (10) is traveling, the required brake force calculator (36, 66) calculates the required vehicle brake force (Fmx) of the at least one vehicle (10) based on the detected deceleration (βrm) of the at least one vehicle (10); and
when at least one vehicle (10) of the vehicle unit (1A) is still or the detected deceleration (βrm) of the at least one vehicle (10) is smaller than zero, the required brake force calculator (36, 66) calculates the required brake force (Fmx) of the at least one vehicle (10) based on a brake command (CB) without taking into consideration the detected deceleration (βrm) of the at least one vehicle (10).

**9.** A brake control method for a vehicle unit (1A) of a train (1), wherein the vehicle unit (1A) is a sub-set of the train (1) and includes a plurality of vehicles (10, 50), the brake control method **characterized by**:

a required brake force calculation step configured to calculate a plurality of required vehicle brake forces (Fmx, Ftx), which are respectively required for the vehicles (10, 50) of the vehicle unit (1A), based on a plurality of detected decelerations (βrm, βrt) respectively corresponding to the vehicles (10, 50) of the vehicle unit (1A) and to calculate a required unit brake force (Fu), which is the total of the required vehicle brake forces (Fmx and Ftx) of the vehicles (10, 50) of the vehicle unit (1A); and
a brake force distribution step configured to distribute the required unit brake force (Fu) between the vehicles (10, 50) of the vehicle unit (1A).

**10.** The brake control method according to claim 9, **characterized in that** the required brake force calculation step includes calculating the required vehicle brake forces (Fmx, Ftx) of the vehicles (10, 50) based on braking distances (Srm, Srt) of the vehicles (10, 50) of the vehicle unit (1A) and detected decelerations (βrm, (Brt) of the vehicles (10, 50).

**11.** The brake control method according to claim 9 or 10, **characterized in that** the required brake force calculation step includes
decreasing the required vehicle brake force (Fmx, Ftx) of one of the vehicles (10, 50) as the detected deceleration (βrm, βrt) of the one of the vehicles increases; and
limiting a decrease amount of the required vehicle brake force (Fmx, Ftx) of the one of the vehicles (10, 50) to an upper limit decrease amount (BD), which is a fixed value, when the detected deceleration (βrm, βrt) of the one of the vehicles is larger than or equal to an upper threshold value (βlim).

**12.** The brake control method according to any one of claims 9 to 11, wherein each of the vehicles (10, 50) includes a mechanical brake (13A-13D) configured to generate brake force with friction, the brake control method being **characterized in that**
the brake force distribution step includes restricting differences in the required vehicle brake force (Fmx, Ftx) of each of the vehicles (10, 50) of the vehicle unit (1A) to within a predetermined range.

**13.** The brake control method according to any one of claims 9 to 12, **characterized in that** the required brake force calculation step includes, when sliding of at least one vehicle (10) of the vehicle unit (1A) is detected, decreasing the required vehicle brake force (Fmx) of the sliding vehicle (10) and increasing the required vehicle brake force (Ftx) of a remaining non-sliding vehicle (50) in the vehicle unit (1A).

**14.** The brake control method according to claim 13, **characterized in that** the required brake force calculation step includes, when re-adhering of the sliding vehicle (10) is detected, increasing the required vehicle brake force (Fmx) of the re-adhered vehicle (10) based on the detected deceleration ((βrm) of the re-adhered vehicle (10) and decreasing the required vehicle brake force (Ftx) of the remaining non-sliding vehicle (50).

**15.** The brake control method according to claim 14, **characterized in that** the increasing the required brake force includes
allocating the re-adhered vehicle (10) with a brake force that increases at a first increasing rate when the detected deceleration (βrm) of the re-adhered vehicle (10) is larger than a target deceleration (βg) that is calculated based on a brake command, and
allocating the re-adhered vehicle (10) with a brake force that increases at a second increasing rate when the detected deceleration (βrm) of the re-adhered vehicle (10) is smaller than the target deceleration (l3g),
wherein the first increasing rate is smaller than the second increasing rate.

16. The brake control method according to any one of claims 9 to 15, **characterized in that** the required brake force calculation step includes
when the detected deceleration (βrm) of at least one vehicle (10) of the vehicle unit (1A) is larger than or equal to zero while the at least one vehicle (10) is traveling, calculating the required vehicle brake force (Fmx) of the at least one vehicle (10) based on the detected deceleration (βrm) of the at least one vehicle (10); and
when at least one vehicle (10) of the vehicle unit (1A) is still or the detected deceleration (βrm) of the at least one vehicle (10) is smaller than zero, calculating the required brake force (Fmx) of the at least one vehicle (10) based on a brake command (CB) without taking into consideration the detected deceleration (βrm) of the at least one vehicle (10).

**Patentansprüche**

1. Bremssteuerungsvorrichtung (20) für eine Fahrzeugeinheit (1A) eines Zuges (1), wobei die Fahrzeugeinheit (1A) eine Teileinheit des Zuges (1) ist und eine Vielzahl von Fahrzeugen (10, 50) beinhaltet, wobei die Bremssteuerungsvorrichtung (20) **gekennzeichnet ist durch:**

   einen Rechner (36, 66) für eine benötigte Bremskraft, der dazu ausgelegt ist, eine Vielzahl von benötigten Fahrzeugbremskräften (Fmx, Ftx) zu berechnen, die jeweils für die Fahrzeuge (10, 50) der Fahrzeugeinheit (1A) benötigt werden, basierend auf einer Vielzahl von ermittelten Bremsungen (βrm, βrt), die jeweils den Fahrzeugen (10, 50) der Fahrzeugeinheit (1A) entsprechen, um eine benötigte Einheitsbremskraft (Fu) zu berechnen, bei der es sich um die Gesamtheit der benötigten Fahrzeugbremskräfte (Fmx und Ftx) der Fahrzeuge (10, 50) der Fahrzeugeinheit (1A) handelt; und
   einen Bremskraftverteiler (39), der dazu ausgelegt ist, die benötigte Einheitsbremskraft (Fu) zwischen den Fahrzeugen (10, 50) der Fahrzeugeinheit (1A) zu verteilen.

2. Bremssteuerungsvorrichtung (20) nach Anspruch 1, **dadurch gekennzeichnet, dass** der Rechner für die benötigte Bremskraft dazu ausgelegt ist, die benötigten Fahrzeugbremskräfte (Fmx, Ftx) der Fahrzeuge (10, 50) basierend auf den Bremswegen (Srm, Sri) der Fahrzeuge (10, 50) der Fahrzeugeinheit (1A) und den ermittelten Bremsungen (βrm, βrt) der Fahrzeuge (10, 50) zu berechnen.

3. Bremssteuerungsvorrichtung (20) nach Anspruch 1 oder 2, **dadurch gekennzeichnet, dass**
   der Rechner (36, 66) für die benötigte Bremskraft die benötigte Fahrzeugbremskraft (Fmx, Ftx) von einem der Fahrzeuge (10, 50) verringert, wenn die ermittelte Bremsung (βrm, βrt) des einen Fahrzeuges ansteigt; und
   der Rechner (36, 66) für die benötigte Bremskraft einen Reduzierungsbetrag der benötigten Fahrzeugbremskraft (Fmx, Ftx) des einen Fahrzeuges (10, 50) auf eine Obergrenze des Reduzierungsbetrags (BD) beschränkt, bei der es sich um einen festen Wert handelt, wenn die ermittelte Bremsung (βrm, βrt) des einen Fahrzeugs größer als oder gleich einem oberen Schwellenwert (βlim) ist.

4. Bremssteuerungsvorrichtung (20) nach einem der vorhergehenden Ansprüche, wobei jedes der Fahrzeuge (10, 50) eine mechanische Bremse (13A-13B) beinhaltet, die dazu ausgelegt ist, eine Bremskraft mit Reibung zu erzeugen, wobei die Bremssteuerungsvorrichtung (20) **dadurch gekennzeichnet ist, dass**
   der Bremskraftverteiler (39) dazu ausgelegt ist, Unterschiede in der benötigten Fahrzeugbremskraft (Fmx, Ftx) der einzelnen Fahrzeuge (10, 50) der Fahrzeugeinheit (1A) auf innerhalb eines vorgegebenen Bereiches zu beschränken.

5. Bremssteuerungsvorrichtung (20) nach einem der vorhergehenden Ansprüche, **dadurch gekennzeichnet, dass**, wenn ein Gleiten von mindestens einem Fahrzeug (10) der Fahrzeugeinheit (1A) ermittelt wird, der Rechner (36, 66) für die benötigte Bremskraft die benötigte Fahrzeugbremskraft (Fmx) des gleitenden Fahrzeugs (10) verringert und die benötigte Fahrzeugbremskraft (Ftx) eines verbleibenden nicht gleitenden Fahrzeugs (50) in der Fahrzeugeinheit (1A) erhöht.

6. Bremssteuerungsvorrichtung (20) nach Anspruch 5, **dadurch gekennzeichnet, dass**, wenn eine erneute Haftung des gleitenden Fahrzeugs (10) ermittelt wird, der Rechner (36, 66) für die benötigte Bremskraft die benötigte Fahrzeugbremskraft (Fmx) des wieder haftenden Fahrzeugs (10) basierend auf der ermittelten Bremsung (βrm) des wieder haftenden Fahrzeugs) erhöht und die benötigte Fahrzeugbremskraft (Ftx) des verbleibenden nicht gleitenden Fahrzeugs (50) verringert.

**7.** Bremssteuerungsvorrichtung (20) nach Anspruch 6, **dadurch gekennzeichnet, dass**
dem wieder haftenden Fahrzeug (10) eine Bremskraft zugewiesen wird, die mit einer ersten Anstiegsrate ansteigt, wenn die ermittelte Bremsung ($\beta$rm) des wieder haftenden Fahrzeugs (10) größer als eine Zielbremsung (ßg) ist, die basierend auf einem Bremsbefehl berechnet wird,
dem wieder haftenden Fahrzeug (10) eine Bremskraft zugewiesen wird, die mit einer zweiten Anstiegsrate ansteigt, wenn die ermittelte Bremsung ($\beta$rm) des wieder haftenden Fahrzeugs (10) kleiner als die Zielbremsung (ßg) ist, und die erste Anstiegsrate kleiner als die zweite Anstiegsrate ist.

**8.** Bremssteuerungsvorrichtung (20) nach einem der vorhergehenden Ansprüche, **dadurch gekennzeichnet, dass**
wenn die ermittelte Bremsung ($\beta$rm) von mindestens einem Fahrzeug (10) der Fahrzeugeinheit (1A) größer als oder gleich null ist, während das mindestens eine Fahrzeug (10) fährt, der Rechner (36, 66) für die benötigte Bremskraft die benötigte Fahrzeugbremskraft (Fmx) des mindestens einen Fahrzeugs (10) basierend auf der ermittelten Bremsung ($\beta$rm) des mindestens einen Fahrzeugs (10) berechnet; und
wenn mindestens ein Fahrzeug (10) der Fahrzeugeinheit (1A) stillsteht oder die ermittelte Bremsung ($\beta$rm) des mindestens einen Fahrzeugs (10) kleiner als null ist, der Rechner (36, 66) für die benötigte Bremskraft die benötigte Fahrzeugbremskraft (Fmx) des mindestens einen Fahrzeugs (10) basierend auf einem Bremsbefehl (CB) berechnet, ohne die ermittelte Bremsung ($\beta$rm) des mindestens einen Fahrzeugs (10) zu berücksichtigen.

**9.** Bremssteuerungsverfahren (20) für eine Fahrzeugeinheit (1A) eines Zuges (1), wobei die Fahrzeugeinheit (1A) eine Teileinheit des Zuges (1) ist und eine Vielzahl von Fahrzeugen (10, 50) beinhaltet, wobei das Bremssteuerungsverfahren (20) **gekennzeichnet ist durch:**

einen Berechnungsschritt für eine benötigte Bremskraft, der dazu ausgelegt ist, eine Vielzahl von benötigten Fahrzeugbremskräften (Fmx, Ftx) zu berechnen, die jeweils für die Fahrzeuge (10, 50) der Fahrzeugeinheit (1A) benötigt werden, basierend auf einer Vielzahl von ermittelten Bremsungen ($\beta$rm, $\beta$rt), die jeweils den Fahrzeugen (10, 50) der Fahrzeugeinheit (1A) entsprechen, und um eine benötigte Einheitsbremskraft (Fu) zu berechnen, bei der es sich um die Gesamtheit der benötigten Fahrzeugbremskräfte (Fmx und Ftx) der Fahrzeuge (10, 50) der Fahrzeugeinheit (1A) handelt; und
einen Bremskraftverteilungsschritt, der dazu ausgelegt ist, die benötigte Einheitsbremskraft (Fu) zwischen den Fahrzeugen (10, 50) der Fahrzeugeinheit (1A) zu verteilen.

**10.** Bremssteuerungsverfahren nach Anspruch 9, **dadurch gekennzeichnet, dass** der Berechnungsschritt für die benötigte Bremskraft das Berechnen der benötigten Fahrzeugbremskräfte (Fmx, Ftx) der Fahrzeuge (10, 50) basierend auf den Bremswegen (Srm, Sri) der Fahrzeuge (10, 50) der Fahrzeugeinheit (1A) und den ermittelten Bremsungen ($\beta$rm, $\beta$rt) der Fahrzeuge (10, 50) beinhaltet.

**11.** Bremssteuerungsverfahren nach Anspruch 9 oder 10, **dadurch gekennzeichnet, dass** der Berechnungsschritt für die benötigte Bremskraft Folgendes beinhaltet:

Verringern der benötigten Fahrzeugbremskraft (Fmx, Ftx) von einem der Fahrzeuge (10, 50), wenn die ermittelte Bremsung ($\beta$rm, $\beta$rt) des einen Fahrzeuges ansteigt; und
Beschränken eines Reduzierungsbetrages der benötigten Fahrzeugbremskraft (Fmx, Ftx) des einen Fahrzeuges (10, 50) auf eine Obergrenze des Reduzierungsbetrags (BD), bei der es sich um einen festen Wert handelt, wenn die ermittelte Bremsung ($\beta$rm, $\beta$rt) des einen Fahrzeugs größer als oder gleich einem oberen Schwellenwert ($\beta$lim) ist.

**12.** Bremssteuerungsverfahren nach einem der Ansprüche 9 bis 11, wobei jedes der Fahrzeuge (10, 50) eine mechanische Bremse (13A-13B) beinhaltet, die dazu ausgelegt ist, eine Bremskraft mit Reibung zu erzeugen, wobei das Bremssteuerungsverfahren **dadurch gekennzeichnet ist, dass**
der Bremskraftverteilungsschritt das Beschränken von Unterschieden in der benötigten Fahrzeugbremskraft (Fmx, Ftx) der einzelnen Fahrzeuge (10, 50) der Fahrzeugeinheit (1A) auf innerhalb eines vorgegebenen Bereiches beinhaltet.

**13.** Bremssteuerungsverfahren nach einem der Ansprüche 9 bis 12, **dadurch gekennzeichnet, dass** der Berechnungsschritt für die benötigte Bremskraft, wenn ein Gleiten von mindestens einem Fahrzeug (10) der Fahrzeugeinheit (1A) ermittelt wird, das Verringern der benötigten Fahrzeugbremskraft (Fmx) des gleitenden Fahrzeugs (10) und das Erhöhen der benötigten Fahrzeugbremskraft (Ftx) eines verbleibenden nicht gleitenden Fahrzeugs (50) in der Fahrzeugeinheit (1A) beinhaltet.

**14.** Bremssteuerungsverfahren nach Anspruch 13, **dadurch gekennzeichnet, dass** der Berechnungsschritt für die benötigte Bremskraft, wenn eine erneute Haftung des gleitenden Fahrzeugs (10) ermittelt wird, das Erhöhen der benötigten Fahrzeugbremskraft (Fmx) des wieder haftenden Fahrzeugs (10) basierend auf der ermittelten Bremsung (βrm) des wieder haftenden Fahrzeugs) und das Verringern der benötigten Fahrzeugbremskraft (Ftx) des verbleibenden nicht gleitenden Fahrzeugs (50) beinhaltet.

**15.** Bremssteuerungsverfahren nach Anspruch 14 oder 10, **dadurch gekennzeichnet, dass** das Erhöhen der benötigten Bremskraft Folgendes beinhaltet:

Zuweisen, zu dem wieder haftenden Fahrzeug (10), einer Bremskraft, die mit einer ersten Anstiegsrate ansteigt, wenn die ermittelte Bremsung (βrm) des wieder haftenden Fahrzeugs (10) größer als eine Zielbremsung (ßg) ist, die basierend auf einem Bremsbefehl berechnet wird, und
Zuweisen, zu dem wieder haftenden Fahrzeug (10), einer Bremskraft, die mit einer zweiten Anstiegsrate ansteigt, wenn die ermittelte Bremsung (βrm) des wieder haftenden Fahrzeugs (10) kleiner als die Zielbremsung (ßg) ist, wobei die erste Anstiegsrate kleiner als die zweite Anstiegsrate ist.

**16.** Bremssteuerungsverfahren nach einem der Ansprüche 9 bis 15, **dadurch gekennzeichnet, dass** der Berechnungsschritt für die benötigte Bremskraft Folgendes beinhaltet:

wenn die ermittelte Bremsung (βrm) von mindestens einem Fahrzeug (10) der Fahrzeugeinheit (1A) größer als oder gleich null ist, während das mindestens eine Fahrzeug (10) fährt, Berechnen der benötigten Fahrzeugbremskraft (Fmx) des mindestens einen Fahrzeugs (10) basierend auf der ermittelten Bremsung (βrm) des mindestens einen Fahrzeugs (10); und
wenn mindestens ein Fahrzeug (10) der Fahrzeugeinheit (1A) stillsteht oder die ermittelte Bremsung (βrm) des mindestens einen Fahrzeugs (10) kleiner als null ist, Berechnen der benötigten Fahrzeugbremskraft (Fmx) des mindestens einen Fahrzeugs (10) basierend auf einem Bremsbefehl (CB), ohne die ermittelte Bremsung (βrm) des mindestens einen Fahrzeugs (10) zu berücksichtigen.

## Revendications

**1.** Dispositif de commande de freinage (20) pour une unité de véhicules (1A) d'un train (1), l'unité de véhicules (1A) étant un sous-ensemble du train (1) et comprenant une pluralité de véhicules (10, 50), le dispositif de commande de freinage (20) étant **caractérisé par** :

un calculateur de forces de freinage requises (36, 66) configuré pour calculer une pluralité de forces de freinage de véhicule requises (Fmx, Ftx), qui sont respectivement requises pour les véhicules (10, 50) de l'unité de véhicules (1A), sur la base d'une pluralité de décélérations détectées (βrm, βrt) correspondant respectivement aux véhicules (10, 50) de l'unité de véhicules (1A) pour calculer une force de freinage d'unité requise (Fu), qui est la somme des forces de freinage de véhicule requises (Fmx et Ftx) des véhicules (10, 50) de l'unité de véhicules (1A) ; et
un répartiteur de force de freinage (39) configuré pour répartir la force de freinage d'unité requise (Fu) entre les véhicules (10, 50) de l'unité de véhicules (1A).

**2.** Dispositif de commande de freinage (20) selon la revendication 1, **caractérisé en ce que** le calculateur de forces de freinage requises est configuré pour calculer les forces de freinage de véhicule requises (Fmx, Ftx) des véhicules (10, 50) sur la base de distances de freinage (Srm, Srt) des véhicules (10, 50) de l'unité de véhicules (1A) et de décélérations détectées (βrm, βrt) des véhicules (10, 50).

**3.** Dispositif de commande de freinage (20) selon la revendication 1 ou 2, **caractérisé en ce que** :

le calculateur de forces de freinage requises (36, 66) diminue la force de freinage de véhicule requise (Fmx, Ftx) de l'un des véhicules (10, 50) lorsque la décélération détectée (βrm, βrt) de l'un des véhicules augmente ; et
le calculateur de forces de freinage requises (36, 66) limite une quantité de diminution de la force de freinage de véhicule requise (Fmx, Ftx) de l'un des véhicules (10, 50) à une quantité de diminution limite supérieure (BD), qui est une valeur fixe, lorsque la décélération détectée (βrm, βrt) de l'un des véhicules est supérieure ou égale à une valeur de seuil supérieure (βlim).

4. Dispositif de commande de freinage (20) selon l'une quelconque des revendications précédentes, dans lequel chacun des véhicules (10, 50) comprend un frein mécanique (13A à 13D) configuré pour générer une force de freinage avec frottement, le dispositif de commande de freinage (20) étant **caractérisé en ce que** le répartiteur de force de freinage (39) est configuré pour restreindre des différences de force de freinage de véhicule requise (Fmx, Ftx) de chacun des véhicules (10, 50) de l'unité de véhicules (1A) dans une plage prédéterminée.

5. Dispositif de commande de freinage (20) selon l'une quelconque des revendications précédentes, **caractérisé en ce que** lorsqu'un glissement d'au moins un véhicule (10) de l'unité de véhicules (1A) est détecté, le calculateur de forces de freinage requises (36, 66) diminue la force de freinage de véhicule requise (Fmx) du véhicule glissant (10) et augmente la force de freinage de véhicule requise (Ftx) d'un véhicule non-glissant restant (50) dans l'unité de véhicules (1A).

6. Dispositif de commande de freinage (20) selon la revendication 5, **caractérisé en ce que**, lorsqu'une ré-adhérence du véhicule glissant (10) est détectée, le calculateur de forces de freinage requises (36, 66) augmente la force de freinage de véhicule requise (Fmx) du véhicule ré-adhéré (10) sur la base de la décélération détectée ($\beta$rm) du véhicule ré-adhéré (10) et diminue la force de freinage de véhicule requise (Ftx) du véhicule non-glissant restant (50).

7. Dispositif de commande de freinage (20) selon la revendication 6, **caractérisé en ce que**
le véhicule ré-adhéré (10) est alloué d'une force de freinage qui augmente à une première vitesse croissante lorsque la décélération détectée ($\beta$rm) du véhicule ré-adhéré (10) est supérieure à une décélération cible ($\beta$g) qui est calculée sur la base d'une instruction de freinage,
le véhicule ré-adhéré (10) est alloué d'une force de freinage qui augmente à une seconde vitesse croissante lorsque la décélération détectée ($\beta$rm) du véhicule ré-adhéré (10) est inférieure à la décélération cible ($\beta$g), et
la première vitesse croissante est inférieure à la seconde vitesse croissante.

8. Dispositif de commande de freinage (20) selon l'une quelconque des revendications précédentes, **caractérisé en ce que**
lorsque la décélération détectée ($\beta$rm) d'au moins un véhicule (10) de l'unité de véhicules (1A) est supérieure ou égale à zéro alors que le au moins un véhicule (10) se déplace, le calculateur de forces de freinage requises (36, 66) calcule la force de freinage de véhicule requise (Fmx) du au moins un véhicule (10) sur la base de la décélération détectée ($\beta$rm) du au moins un véhicule (10) ; et
lorsqu'au moins un véhicule (10) de l'unité de véhicules (1A) est immobile ou que la décélération détectée ($\beta$rm) du au moins un véhicule (10) est inférieure à zéro, le calculateur de forces de freinage requises (36, 66) calcule la force de freinage requise (Fmx) du au moins un véhicule (10) sur la base d'une instruction de freinage (CB) sans prendre en compte la décélération détectée ($\beta$rm) du au moins un véhicule (10).

9. Procédé de commande de freinage pour une unité de véhicules (1A) d'un train (1), dans lequel l'unité de véhicules (1A) est un sous-ensemble du train (1) et comprend une pluralité de véhicules (10, 50), le procédé de commande de freinage étant **caractérisé par** :

une étape de calcul de forces de freinage requises configurée pour calculer une pluralité de forces de freinage de véhicule requises (Fmx, Ftx), qui sont respectivement requises pour les véhicules (10, 50) de l'unité de véhicules (1A), sur la base d'une pluralité de décélérations détectées ($\beta$rm, $\beta$rt) correspondant respectivement aux véhicules (10, 50) de l'unité de véhicules (1A) et pour calculer une force de freinage d'unité requise (Fu), qui est la somme des forces de freinage de véhicule requises (Fmx et Ftx) des véhicules (10, 50) de l'unité de véhicule (1A) ; et
une étape de répartition de force de freinage configurée pour répartir la force de freinage d'unité requise (Fu) entre les véhicules (10, 50) de l'unité de véhicules (1A).

10. Procédé de commande de freinage selon la revendication 9, **caractérisé en ce que** l'étape de calcul de forces de freinage requises comprend le calcul des forces de freinage de véhicule requises (Fmx, Ftx) des véhicules (10, 50) sur la base de distances de freinage (Srm, Srt) des véhicules (10, 50) de l'unité de véhicules (1A) et de décélérations détectées ($\beta$rm, $\beta$rt) des véhicules (10, 50).

11. Procédé de commande de freinage selon la revendication 9 ou 10, **caractérisé en ce que** l'étape de calcul de forces de freinage requises comprend
la diminution de la force de freinage de véhicule requise (Fmx, Ftx) de l'un des véhicules (10, 50) lorsque la décélération détectée ($\beta$rm, $\beta$rt) de l'un des véhicules augmente ; et

la limitation d'une quantité de diminution de la force de freinage de véhicule requise (Fmx, Ftx) de l'un des véhicules (10, 50) à une quantité de diminution limite supérieure (BD), qui est une valeur fixe, lorsque la décélération détectée ($\beta$rm, $\beta$rt) de l'un des véhicules est supérieure ou égale à une valeur de seuil supérieure ($\beta$lim).

12. Procédé de commande de freinage selon l'une quelconque des revendications 9 à 11, dans lequel chacun des véhicules (10, 50) comprend un frein mécanique (13A à 13D) configuré pour générer une force de freinage avec frottement, le procédé de commande de freinage étant **caractérisé en ce que** l'étape de répartition de force de freinage comprend de restreindre des différences de la force de freinage de véhicule requise (Fmx, Ftx) de chacun des véhicules (10, 50) de l'unité de véhicules (1A) dans une plage prédéterminée.

13. Procédé de commande de freinage selon l'une quelconque des revendications 9 à 12, **caractérisé en ce que** l'étape de calcul de forces de freinage requises comprend, lorsqu'un glissement d'au moins un véhicule (10) de l'unité de véhicules (1A) est détecté, la diminution de la force de freinage de véhicule requise (Fmx) du véhicule glissant (10) et l'augmentation de la force de freinage de véhicule requise (Ftx) d'un véhicule non-glissant restant (50) dans l'unité de véhicules (1A).

14. Procédé de commande de freinage selon la revendication 13, **caractérisé en ce que** l'étape de calcul de forces de freinage requises comprend, lorsqu'une ré-adhérence du véhicule glissant (10) est détectée, l'augmentation de la force de freinage de véhicule requise (Fmx) du véhicule ré-adhéré (10) sur la base de la décélération détectée ($\beta$rm) du véhicule ré-adhéré (10) et la diminution de la force de freinage de véhicule requise (Ftx) du véhicule non-glissant restant (50).

15. Procédé de commande de freinage selon la revendication 14, **caractérisé en ce que** l'augmentation de la force de freinage requise comprend
l'attribution au véhicule ré-adhéré (10) d'une force de freinage qui augmente à une première vitesse croissante lorsque la décélération détectée ($\beta$rm) du véhicule ré-adhéré (10) est supérieure à une décélération cible ($\beta$g) qui est calculée sur la base d'une instruction de freinage, et
l'attribution au véhicule ré-adhéré (10) d'une force de freinage qui augmente à une seconde vitesse croissante lorsque la décélération détectée ($\beta$rm) du véhicule ré-adhéré (10) est inférieure à la décélération cible ($\beta$g),
dans lequel la première vitesse croissante est inférieure à la seconde vitesse croissante.

16. Procédé de commande de freinage selon l'une quelconque des revendications 9 à 15, **caractérisé en ce que** l'étape de calcul de forces de freinage requises comprend
lorsque la décélération détectée ($\beta$rm) d'au moins un véhicule (10) de l'unité de véhicules (1A) est supérieure ou égale à zéro alors que le au moins un véhicule (10) se déplace, le calcul de la force de freinage de véhicule requise (Fmx) du au moins un véhicule (10) sur la base de la décélération détectée ($\beta$rm) du au moins un véhicule (10) ; et lorsqu'au moins un véhicule (10) de l'unité de véhicules (1A) est immobile ou que la décélération détectée ($\beta$rm) du au moins un véhicule (10) est inférieure à zéro, le calcul de la force de freinage requise (Fmx) du au moins un véhicule (10) sur la base d'une instruction de freinage (CB) sans prendre en compte la décélération détectée ($\beta$rm) du au moins un véhicule (10).

Fig.1

Fig.2

EP 3 056 397 B1

# Fig.3

Fig.4

```
        ┌──────────────────────┐
        │    Brake Control     │
        └──────────────────────┘
                   │
                   ▼  ~S11
              ╱──────────╲
             ╱  Vehicle   ╲
   NO  ╱───╱ speed Vu of vehicle ╲
   │       ╲ unit greater than ╱
   │        ╲   0 km/h?    ╱
   │         ╲──────────╱
   │              │ YES
   │              ▼  ~S12
   │         ╱──────────╲
   │        ╱  Vehicle   ╲       NO
   │   ╱───╱ unit just started power ╲───────┐
   │   │    ╲    running?    ╱               │
   │   │     ╲──────────╱                    │
   │   │          │ YES                      │
   │   └──────────┤                          │
   └──────────────┤                          │
                  ▼  ~S14                     ▼  ~S13
     ┌────────────────────────┐   ┌────────────────────────┐
     │ Execute open loop control│  │  Execute deceleration   │
     └────────────────────────┘   │    feedback control     │
                  │               └────────────────────────┘
                  │◄──────────────────────────┘
                  ▼
        ┌──────────────────────┐
        │         END          │
        └──────────────────────┘
```

Fig.5

```
        ┌────────────────────────────┐
        │ Deceleration Limiter Control│
        └────────────────────────────┘
                      │
                      ▼  ~S21
                 ╱──────────╲
                ╱   Actual   ╲
               ╱ deceleration βrm ╲       NO
              ╱ greater than or equal to ╲───────┐
               ╲ upper limit threshold ╱         │
                ╲  value βllm?   ╱                │
                 ╲──────────╱                     │
                      │ YES                       │
                      ▼                           │
     ┌────────────────────────────┐               │
     │ Subtract upper limit decrease│  ~S22        │
     │  amount BD from required     │              │
     │ reference brake force Fms    │              │
     └────────────────────────────┘               │
                      │◄──────────────────────────┘
                      ▼
        ┌──────────────────────┐
        │         END          │
        └──────────────────────┘
```

25

## Fig.6

```
        ( Slide Protection Control )
                    │
                    ▼
        ┌─────────────────────────┐
        │      Execute slide      │──S31
        │    distribution control  │
        └─────────────────────────┘
                    │
                    ▼◄────────────────┐
                   ╱─╲ ～S32          │
                 ╱     ╲              │
               ╱  Sliding wheel ╲  NO │
               ╲  re-adhered?   ╱─────┘
                 ╲     ╱
                   ╲─╱
                    │ YES
                    ▼
        ┌─────────────────────────┐
        │ Execute re-adhesion control │──S33
        └─────────────────────────┘
                    │
                    ▼
              (     END     )
```

26

# Fig.7

(a) Brake Command CB

(b) Motor Vehicle Speed

(c) Actual Deceleration βrm

(d) Required Vehicle Brake Force Fmx

Time

# Fig.8

Large
↑
Coefficients P, I
↓
Small

PL, IL ┈┈┈┈┈┈┈┈┈┈┈┈┈┈┈┈┈┈┈

SU

Low ← Axle Speed → High

# Fig.9

Large
↑
BC Pressure
↓
Small

t11    t12

Time

28

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 59107502 A
- US 5823638 A
- US 2011029167 A1
- EP 2527183 A1

**Non-patent literature cited in the description**

- Development of a braking system equipped with deceleration feedback control. **NANKYO et al.** RTRI REPORT. Railway Technical Research Institute, April 2009, vol. 23, 41-46